(19) Europäisches Patentamt
European Patent Office
Office européen des brevets

(11) EP 4 478 435 A1

# (12) EUROPEAN PATENT APPLICATION

(43) Date of publication:
**18.12.2024 Bulletin 2024/51**

(21) Application number: **24175949.7**

(22) Date of filing: **15.05.2024**

(51) International Patent Classification (IPC):
***H01M 4/04*** *(2006.01)* ***C01B 32/20*** *(2017.01)*
***C01B 33/00*** *(2006.01)* ***C09C 1/46*** *(2006.01)*
***C01G 53/00*** *(2006.01)* ***H01M 4/36*** *(2006.01)*
***H01M 4/38*** *(2006.01)* ***H01M 4/587*** *(2010.01)*
***H01M 10/0525*** *(2010.01)* *H01M 4/02* *(2006.01)*

(52) Cooperative Patent Classification (CPC):
**H01M 4/366; C01B 32/205; C01G 53/50; H01M 4/0471; H01M 4/386; H01M 4/587; H01M 10/0525;** C01P 2002/72; C01P 2002/74; C01P 2004/03; C01P 2004/45; C01P 2004/61; C01P 2004/62; C01P 2004/64; C01P 2004/80;
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.05.2023 KR 20230062573**
**29.08.2023 KR 20230113832**
**16.10.2023 KR 20230138050**
**20.11.2023 KR 20230160195**

(71) Applicant: **Lemon Energy Inc.**
**Incheon 22825 (KR)**

(72) Inventors:
- **Lee, Si Hyun**
  **22825 Incheon (KR)**
- **Lee, Jin Suk**
  **22825 Incheon (KR)**
- **Ahn, Yu Jeong**
  **22825 Incheon (KR)**

(74) Representative: **Grünecker Patent- und Rechtsanwälte PartG mbB**
**Leopoldstraße 4**
**80802 München (DE)**

## (54) SILICON CARBON COMPOSITE ANODE MATERIALS, PREPARATION METHOD THEREOF, AND SECONDARY BATTERY COMPRISING THE SAME

(57) Disclosed are a silicon carbon composite anode material, a method of preparing the same, and a secondary battery including the same. In one embodiment, the anode material comprises: a primary particle comprising a first hollow core having a first hollow portion therein and nano-silicon particles packed in the first hollow portion; and a secondary particle comprising a second hollow core having a second hollow portion therein and at least one primary particle packed in the second hollow portion, wherein the first hollow core has a different hardness than the second hollow core.

FIG. 1

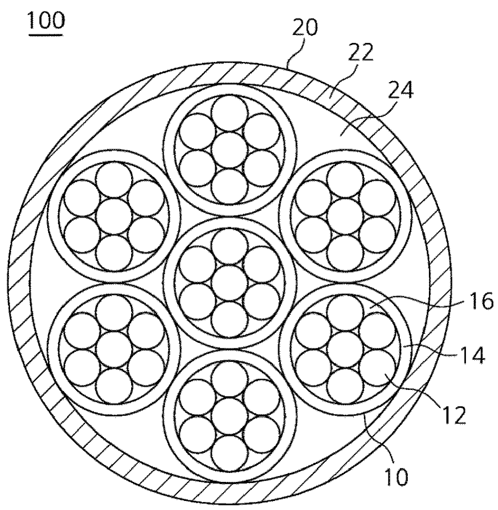


EP 4 478 435 A1

(52) Cooperative Patent Classification (CPC): (Cont.)
C01P 2006/12; C01P 2006/40; H01M 2004/021

## Description

### Cross-Reference to Related Application

This application claims the benefit of Korean Patent Application No. 10-2023-0062573, filed on May 15, 2023, No. 10-2023-0113832, filed on August 29, 2023, No. 10-2023-0138050 filed on October 16, 2023, and No. 10-2023-0160195 filed on November 20, 2023 in the Korean Intellectual Property Office, the entire disclosures of which are incorporated herein by reference.

### Field of the Invention

The present invention relates to a silicon carbon composite anode material, a preparation method thereof, and a secondary battery including the same.

### Description of the Related Art

Currently, generation of greenhouse gas including carbon dioxide and the like and global temperature rise due to the use of fossil energy are of serious concern. Regulation on emission of carbon dioxide is strengthened in countries around the world and introduction of electric vehicles using electricity as a power source is rapidly increasing to replace internal combustion vehicles driven by fossil fuels as a power source.

Secondary batteries are essential parts of electric vehicles to supply electricity thereto and can be repeatedly used through recharging, unlike primary batteries used once and discarded. In addition to electric vehicles, secondary batteries are used in various fields, such as notebook PCs, mobile devices, vertical take-off/landing aircraft used for Urban Air Mobility (UAM), and electric storage systems. In recent years, demand for high-capacity, low-weight and high-efficiency secondary batteries has increased with industrial development, and research and development of such secondary batteries have been actively conducted.

Representative secondary batteries include lead storage batteries, nickel-cadmium batteries, and lithium ion secondary batteries. Among these secondary batteries, the lithium secondary batteries generate electrical energy through intercalation and deintercalation of lithium ions (Li+) during charging/discharging, and have light weight and high energy density to be used in various fields, such as electric vehicles and the like.

The lithium secondary battery includes a cathode; an anode; an electrolyte disposed between the cathode and the anode; and a separator embedded in the electrolyte, in which each of the cathode and the anode includes active materials on a current collector. In the lithium secondary battery, a cathode material includes a lithium transition metal oxide and determines capacity and average voltage of the lithium ion battery as a lithium ion source, and an anode material stores and releases lithium ions emitted from the cathode to allow electric current to flow through an external circuit. The electrolyte acts as a medium for movement of lithium ions between the cathode and the anode inside the secondary battery.

In a typical lithium ion battery, crystalline carbon materials or amorphous carbon materials, such as natural graphite and artificial graphite, are used as the anode materials.

In recent years, silicon (Si) has attracted attention as an anode material instead of carbon. Since graphite used as the anode material in the art can store 1 lithium ion per 6 carbon atoms, whereas silicon (Si) can store 4.4 lithium ions per atom, silicon has advantages of a higher energy density than graphite, a theory capacity of about 4,200 mAh/g, and a very fast discharge rate.

However, a silicon anode material has a problem of low structural stability. In the lithium ion battery, the anode material undergoes anode volume expansion (lithiation) in the course of storing lithium ions. That is, graphite allows a volume expansion of about 10% to 20%, whereas silicon (Si) allows a large volume expansion of 4 to 5 times through reaction of 4.4 lithium ions per silicon to form $Li_{22}Si_5$ alloys. In particular, the silicon anode material has high crystal brittleness and thus can suffer from pulverization (particle cracking, fracture) and electrical separation from the current collector (Cu electrode plate) during repeated charging/discharging of the lithium ion battery, causing rapid capacity decay and decrease in lifespan of the lithium ion battery. Therefore, there is a need for preparation of an anode material to prevent fracture of the anode material due to such volume expansion of silicon.

In order to prevent fracture of the anode material due to such volume expansion of silicon, there is a need for size optimization of the anode material and for suitable control of the number of silicon particles contained in the anode material.

In addition, the silicon anode material has a problem of rapid deterioration in efficiency due to change in an interface state between the anode material (anode active material), the electrolyte, and the electrode. This is caused by generation of numerous lithium traps when silicon particles are broken due to expansion of the anode material during charging of the secondary battery. More specifically, since a solid electrolyte interphase (SEI) layer can be easily broken by mechanical stress during expansion of the silicon particles, a large amount of the SEI layer is formed on outer

circumferential surfaces of the silicon particles when destruction and regeneration of the SEI layer is repeated during charging/discharging of the secondary battery, thereby causing a lithium trap phenomenon and deterioration in electrical contact between the silicon particles through increase in distance between the silicon particles. The SEI layer is a protective film formed on an outer circumferential surface of the active material upon reaction of the electrolyte with the active material of the electrode and has high lithium ion conductivity despite low electron mobility, thereby providing a passage through which lithium ions move between the electrolyte and the anode material. Since graphite allows a small volume change, there is no problem with the SEI layer. However, since silicon expands to the extent of destroying the SEI layer during charging of the secondary battery, lithium is consumed by lithiation of the silicon particles and a gas is generated. As a result, the SEI layer gradually hardens and becomes thicker, preventing lithium ions from having access to the electrode and causing reduction in battery life through restriction of oxidation-reduction reaction of lithium.

Therefore, studies are being actively conducted to prevent fracture of the anode material during charging/-discharging of the secondary battery through improvement in structural stability of the silicon anode material.

In addition, there is a need for size optimization of the anode material to prevent fracture of the anode material and reduction in capacity thereof due to expansion of silicon upon charging/discharging, and studies are being conducted to suitably control the number of silicon particles contained in the anode material.

Further, studies are being conducted to prevent fracture of the anode material and reduction in capacity thereof due to volume expansion of silicon upon charging/discharging.

The background technique of the present invention is disclosed in Korean Patent Registration No. 10-2185490 (Publication date: December 2, 2020, Title of Invention: Negative active material comprising silicon composite oxide for non-aqueous electrolyte secondary battery and manufacturing method of the same).

**Summary of the Invention**

It is one object of the present invention to provide a silicon carbon composite anode material that has good durability and structural stability.

It is another object of the present invention to provide a silicon carbon composite anode material that can prevent fracture of the anode material and deterioration in energy capacity thereof through minimization of volume expansion of silicon particles due to intercalation of lithium ions during charging/discharging of a battery.

It is a further object of the present invention to provide a silicon carbon composite anode material that can prevent fracture of the anode material due to volume expansion of silicon particles upon charging of a battery while securing good electrical characteristics through optimization of the number of silicon particles in the anode material.

It is yet another object of the present invention to provide a silicon carbon composite anode material that can prevent fracture of the anode material due to volume expansion of silicon particles while securing good electrical characteristics through optimization of the number of primary particles packed in a secondary particle and the number of silicon particles packed in the primary particles in the anode material.

It is yet another object of the present invention to provide a silicon carbon composite anode material that exhibits good properties in terms of electrical characteristics, high capacity, high output and long lifespan, reversibility and initial efficiency.

It is yet another object of the present invention to provide a silicon carbon composite anode material that can be contained in high content in fabrication of an anode for secondary batteries.

It is yet another object of the present invention to provide a silicon carbon composite anode material that has good productivity and economic feasibility.

It is yet another object of the present invention to provide a method of preparing the silicon carbon composite anode material.

It is yet another object of the present invention to provide a secondary battery including the silicon carbon composite anode material.

One aspect of the present invention relates to a silicon carbon composite anode material.

1. The silicon carbon composite anode material includes: a primary particle including a first hollow core having a first hollow portion therein and nano-silicon particles packed in the first hollow portion; and a secondary particle including a second hollow core having a second hollow portion therein and at least one primary particle packed in the second hollow portion, wherein the first hollow core has a different hardness than the second hollow core.
2. In embodiment 1, the number of nano-silicon particles packed in the first hollow portion may be set such that the total volume of expanded nano-silicon particles formed by intercalation of lithium ions into the nano-silicon particles is equal to or less than a volume of the first hollow portion, and the number of primary particles packed in the second hollow portion may be set such that the total volume of the primary particles is equal to or less than a volume of the second hollow portion.
3. In embodiment 2, the primary particles may include first nano-silicon particles and second nano-silicon particles

having a radius ri and a radius $r_2$, respectively, and the numbers ($n_1$, $n_2$) of first and second nano-silicon particles packed in the first hollow portion may satisfy Formula 1.

[Formula 1]

$$n_1 \left(\frac{r_1'}{R}\right)^3 + n_2 \left(\frac{r_2'}{R}\right)^3 \leq 1$$

,

where $r_1$' denotes the radius of first expanded nano-silicon particles, $r_2$' denotes the radius of second expanded nano-silicon particles, and R is the radius of the first hollow portion, $r_1$' and $r_2$' being 1.5874*$r_1$ and 1.5874*$r_2$, respectively.

4. In embodiment 3, the secondary particle may include primary particles (1) and (2) having radii $a_1$ and $a_2$, respectively, and the numbers of primary particles (1) and (2) packed in the second hollow portion may satisfy Formula 2.

[Formula 2]

$$n_3 \left(\frac{a_1}{b}\right)^3 + n_4 \left(\frac{a_2}{b}\right)^3 \leq 1$$

,

where $a_1$ and $n_3$ denote the radius and the number of primary particles (1), respectively; $a_2$ and $n_4$ denote the radius and the number of primary particles (2), respectively; and b denotes the radius of the second hollow portion.

5. In embodiments 1 to 4, the first hollow core may have a pencil hardness of 4H or higher and the second hollow core may have a pencil hardness of less than 4H, as measured in accordance with ISO 15184.

6. In embodiments 1 to 5, the first hollow core may have a pencil hardness of less than 4H and the second hollow core may have a pencil hardness of 4H or higher, as measured in accordance with ISO 15184.

7. In embodiments 1 to 6, the first hollow core may have a thickness of 5 nm to 300 nm and an average particle diameter of 1 μm to 10 μm, the nano-silicon particles may have an average particle diameter of 50 nm to 500 nm, and the number of nano-silicon particles packed in the first hollow portion may range from 50 to 10,000.

8. In embodiments 1 to 7, the second hollow core may have a thickness of 5 nm to 500 nm and an average diameter of 3 to 25 μm, and the number of primary particles packed in the second hollow portion may range from 5 to 500.

9. In embodiments 1 to 8, the anode material may include 25 wt% to 80 wt% of the nano-silicon particles, 1 wt% to 40 wt% of the first hollow core, and 1 wt% to 40 wt% of the second hollow core based on the total weight of the anode material.

10. In embodiments 1 to 9, the anode material may include the second hollow core and the first hollow core in a weight ratio of 1:0.5 to 1:6.

11. In embodiments 1 to 10, the anode material may further include a first coating layer formed on an outer circumferential surface of the second hollow core, wherein the first coating layer includes at least one of a hard coating layer, a soft coating layer and a medium coating layer, and has a different hardness than the second hollow core.

12. In embodiments 1 to 11, the primary particle may have a nano-silicon particle packing density of 75% or less.

Another aspect of the present invention relates to a method of preparing the silicon carbon composite anode material.

13. The method may include: drying a nano-silicon slurry to prepare dried powder; preparing a first mixture including the dried powder and a first coating material; and preparing a first intermediate material using the first mixture and a second coating material, wherein the first coating material includes a hard coating material or a soft coating material, the second coating material includes a hard coating material, a medium coating material, or a soft coating material, the hard coating layer has a higher hardness than the medium coating layer, the medium coating layer has a higher hardness than the soft coating layer, and the first intermediate material includes: a primary particle including a first hollow core having a first hollow portion therein and nano-silicon particles packed in the first hollow portion; and a secondary particle including a second hollow core having a second hollow portion therein and at least one primary particle packed in the second hollow portion, wherein the first hollow core has a different hardness than the second hollow core.

14. In embodiment 13, the nano-silicon slurry may be prepared by dispersing silicon powder and a dispersant in a first solvent to prepare a dispersion, followed by grinding the dispersion, and the first solvent may include at least one of water, ethanol, isopropyl alcohol, and potassium hydroxide (KOH).

15. In embodiments 13 to 14, the method may further include forming a first coating layer on an outer circumferential

surface of the first intermediate material after preparation of the first intermediate material, wherein the first coating layer includes at least one of a hard coating layer, a medium coating layer, and a soft coating layer, the first coating layer having a different hardness than the second hollow core; the hard coating layer is formed by sintering a mixture of the first intermediate material and the hard coating material; the medium coating layer is formed by heat treatment of the first intermediate material in a hydrocarbon gas atmosphere; and the soft coating layer is formed by sintering a mixture of the first intermediate material and the soft coating material.

A further aspect of the present invention relates to a secondary battery including the silicon carbon composite anode material.

16. The secondary battery may include a cathode; an anode; and an electrolyte disposed between the cathode and the anode, wherein the anode includes the anode material.

The anode material according to the present invention has good durability and structural stability, can prevent fracture of the anode material due to volume expansion of silicon particles due to intercalation of lithium ions during charging/discharging, can minimize reduction in capacity, can prevent fracture of the anode material due to volume expansion of silicon particles upon charging while securing good electrical characteristics through optimization of the number of primary particles packed in a secondary particle of the anode material and the number of nano-silicon particles packed in the primary particle, can be contained in high content in fabrication of an anode for secondary batteries, and has good properties in terms of high capacity, high energy density, high output and long lifespan while securing good reversibility, initial efficiency, productivity, and economic feasibility.

**Brief Description of the Drawings**

FIG. 1 is a view of an anode material according to one embodiment of the present invention.
FIG. 2 is a view of an anode material according to another embodiment of the present invention.
FIG. 3 is an XRD graph of an anode material of Example 1.

**Detailed Description of the Invention**

Hereinafter, embodiments of the present invention will be described in detail with reference to the accompanying drawings.

In the drawings, portions irrelevant to the description will be omitted for clarity and like components will be denoted by like reference numerals throughout the specification. Although lengths, thicknesses or widths of various components may be exaggerated for understanding in the drawings, the present invention is not limited thereto.

In addition, the terms as used herein are defined by taking functions of the invention into account and can be changed according to the custom or intention of users or operators. Therefore, definition of the terms should be made according to the overall disclosure set forth herein.

**Silicon carbon composite anode material**

One aspect of the present invention relates to a silicon carbon composite anode material. FIG. 1 is a view of an anode material according to one embodiment of the present invention. Referring to FIG. 1, a silicon carbon composite anode material 100 includes: a primary particle 10 including a first hollow core 14 having a first hollow portion 16 therein and nano-silicon particles 12 packed in the first hollow portion 16; and a secondary particle 20 including a second hollow core 22 having a second hollow portion 24 therein and at least one primary particle 10 packed in the second hollow portion 24, wherein the first hollow core 14 has a different hardness than the second hollow core 22.

In one embodiment, the anode material may include 25 wt% to 80 wt% of the nano-silicon particles, 1 wt% to 40 wt% of the first hollow core, and 1 wt% to 40 wt% of the second hollow core.

In one embodiment, the anode material may have a particle density of 1 g/cm$^3$ to 3 g/cm$^3$. Under this condition, the anode material can secure good output and is lightweight.

In one embodiment, the anode material may have an average particle diameter of 3 μm to 30 μm. Under this condition, the anode material can secure good properties in terms of high capacity, high output, structural stability, and long lifespan, and cap prevent fracture of the anode material due to expansion of the nano-silicon particles. For example, the anode material may have an average particle diameter of 3 μm to 30 μm, 3 μm to 25 μm, 3 μm to 20 μm, 5 μm to 20 μm, 5 μm to 15 μm, 5 μm to 18 μm, or 6 μm to 12 μm. For example, the anode material may have an average particle diameter of 3, 4, 5, 6, 7, 8, 9, 10, 11, 12, 13, 14, 15, 16, 17, 18, 19, 20, 21, 22, 23, 24, 25, 26, 27, 28, 29, or 30 μm.

## Primary particle

The primary particle includes the first hollow core 14 having the first hollow portion 16 therein and the nano-silicon particles 12 packed in the first hollow portion 16.

In one embodiment, the primary particle may have an average particle diameter (d50) of 1 μm to 10.5 μm. Under this condition, the anode material can prevent fracture of the primary particle due to expansion of the nano-silicon particles in charging/discharging while securing long lifespan. For example, the primary particle may have an average particle diameter of 1 μm to 6 μm, 1 μm to 5.5 μm, 1 μm to 4.5 μm, or 2 μm to 3 μm. For example, the primary particle may have an average particle diameter of 1, 2, 3, 4, 5, 6, 7, 8, 9, 10, or 10.5 μm.

## First hollow core

The first hollow core may have a spherical shape or an elliptical shape. For example, the first hollow core may have a spherical shape.

In one embodiment, the first hollow core is formed by sintering a hard coating material or a soft coating material described below.

The first hollow core has a different hardness than the second hollow core described below. Under this condition, the first hollow core can exhibit good properties in terms of electrical conductivity, hardness and mechanical strength, and it is possible to prevent damage to or fracture of the first hollow core (or the anode material) upon expansion of the nano-silicon particles due to intercalation of lithium ions thereinto during charging of a secondary battery, thereby preventing reduction in capacity while securing long lifespan.

In one embodiment, the first hollow portion may have an average diameter of 1 μm to 10 μm. Under this condition, the first hollow portion can prevent fracture of the primary particle due to expansion of the nano-silicon particles upon charging/discharging while securing long lifespan. For example, the first hollow portion may have an average diameter of 1 μm to 8 μm, 1 μm to 6 μm, 1 μm to 5 μm, 1 μm to 4 μm, or 2 μm to 3 μm. For example, the first hollow portion may have an average diameter of 1, 2, 3, 4, 5, 6, 7, 8, 9 or 10 μm.

For example, the first hollow portion may have a radius of 0.5 μm to 5 μm, 0.5 μm to 4 μm, or 1 μm to 1.5 μm.

In one embodiment, the first hollow core may have a thickness of 5 nm to 300 nm. Under this condition, the first hollow core can exhibit good hardness and mechanical strength to prevent damage to or fracture of the anode material even upon expansion of the nano-silicon particles. For example, the first hollow core may have a thickness of 5 nm to 250 nm, 10 nm to 300 nm, or 10 nm to 50 nm.

In one embodiment, the first hollow core may have a density of 1.8 g/cm$^3$ to 2.5 g/cm$^3$. Under this condition, the anode material is lightweight and can exhibit good structural stability. For example, the first hollow core may have a density of 1.8 g/cm$^3$ to 2.1 g/cm$^3$.

In another embodiment, the first hollow core may have a density of less than 1.8 g/cm$^3$. Under this condition, the anode material is lightweight and can exhibit good structural stability. For example, the first hollow core may have a density of 0.3 g/cm$^3$ to 1.7 g/cm$^3$.

In one embodiment, the first hollow core may have a specific surface area (BET) of 100 m$^2$/g or less. Under this condition, the anode material can exhibit good structural stability.

In another embodiment, the first hollow core may have a specific surface area (BET) of greater than 100 m$^2$/g. Under this condition, the anode material can exhibit good structural stability. For example, the first hollow core may have a specific surface area (BET) of 110 m$^2$/g to 500 m$^2$/g.

In one embodiment, the first hollow core may have a purity (impurity content) of 100 ppm or less. Under this condition, the anode material can exhibit good electrical conductivity.

In another embodiment, the first hollow core may have a purity (impurity content) of 500 ppm or more. Under this condition, the anode material can exhibit good electrical conductivity. For example, the first hollow core may have an impurity content of 500 ppm to 3,000 ppm.

In one embodiment, the first hollow core may have a resistivity of 3 μΩ·m to 5 μΩ·m. Under this condition, the anode material can exhibit good electrical conductivity.

In another embodiment, the first hollow core may have a resistivity of 20 μΩ·m or more. Under this condition, the anode material can exhibit good electrical conductivity. For example, the first hollow core may have a resistivity of 20μΩ·m to 80 μΩ·m.

In one embodiment, the first hollow core may have a pencil hardness of 4H or higher, as measured in accordance with ISO 15184. Under this condition, the first hollow core can exhibit good durability and strength, and it is possible to prevent damage to or fracture of the first hollow core (or the anode material) upon expansion of the nano-silicon particles. For example, the first hollow core may have a pencil hardness of 4H to 6H.

In another embodiment, the first hollow core may have a pencil hardness of less than 4H, as measured in accordance with ISO 15184. Under this condition, the first hollow core can have good flexibility and it is possible to

effectively prevent damage to or fracture of the first hollow core (or the anode material) upon expansion of the nano-silicon particles due to intercalation of lithium ions thereinto. For example, the first hollow core may have a pencil hardness of B to 3H. In another embodiment, the first hollow core may have a pencil hardness of 2H to 3H.

In one embodiment, the first hollow core may be present in an amount of 1 wt% to 40 wt% based on the total amount of the anode material. Within this range, the anode material can exhibit good properties in terms of durability, structural stability, and electrical properties. For example, the first hollow core may be present in an amount of 1 wt% to 30 wt%, 1 wt% to 25 wt%, 1 wt% to 20 wt%, 1 wt% to 15 wt%, 2 wt% to 15 wt%, 3 wt% to 15 wt%, or 5 wt% to 15 wt%. For example, the hollow core the hollow core may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%.

**Nano-silicon particles**

The nano-silicon particles serve to secure high capacity and high output. In one embodiment, the nano-silicon particles may have a spherical, polyhedral, elliptical or amorphous shape. For example, the nano-silicon particles may have a spherical shape.

Conventionally, in order to prevent fracture of the anode material upon expansion of silicon due to intercalation of lithium ions thereinto, the anode material is prepared by adding flake graphite to silicon, followed by grinding and sintering. However, in preparation of the anode material, oxidation of silicon occurs upon grinding silicon and the flake graphite, thereby causing significant reduction in capacity to less than 1,400 mAh/g.

Conversely, the anode material according to the present invention employs 1) the feature of including the first hollow core and the second hollow core having different hardnesses, and 2) the feature of optimizing the number of nano-silicon particles in the primary particle and the number of primary particles in the secondary particle, and does not include flake graphite to prevent fracture of the anode material due to expansion of the nano-silicon particles, thereby securing long lifespan while realizing a high capacity of 2,000 mAh/g or more.

In one embodiment, the number of nano-silicon particles packed in the first hollow portion may be set such that the total volume of expanded nano-silicon particles formed by intercalation of lithium ions into the nano-silicon particles is equal to or less than the volume of the first hollow portion. Under this condition of the number of nano-silicon particles, it is possible to prevent cracking or fracture of the first hollow core (or the anode material) due to expansion of the nano-silicon particles.

In one embodiment, the nano-silicon particles may exhibit relatively high crystallinity.

In one embodiment, the nano-silicon particles may have an effective peak at a diffraction angle ($2\theta$) of 26° to 30°, 47° to 50°, 53° to 58°, 68° to 72°, 74° to 78°, and/or 88° to 90° in the X-ray diffraction (XRD) spectrum. Under this condition, the anode material can secure good properties in terms of high capacity and high output and can effectively prevent fracture of the nano-silicon particles upon charging/discharging.

For example, the nano-silicon particles may have an effective peak at a diffraction angle ($2\theta$) of 27.5° to 28.5°, 47.5° to 48.5°, 56° to 57°, 68° to 69.5°, 75° to 76°, and 88° to 90° in the X-ray diffraction spectrum, in which the effective peak may represent the (111), (220), (311), (400), (331) and (442) planes. Under this condition, the anode material can secure good properties in terms of high capacity and high output and can effectively prevent fracture of the silicon particles upon charging/discharging.

For example, the nano-silicon particles may have effective peaks at a diffraction angle ($2\theta$) of 26° to 30° at the (111) plane and at a diffraction angle ($2\theta$) of 47° to 50° at the (220) plane in the X-ray diffraction spectrum using CuK$\alpha$-ray of 1.54 Å to 2.0 Å.

For example, the nano-silicon particles may have effective peaks at a diffraction angle ($2\theta$) of 26° to 30° at the (111) plane and at a diffraction angle ($2\theta$) of 47° to 50° at the (220) plane in the X-ray diffraction spectrum using CuK$\alpha$-ray of 1.54178 Å under conditions: 0.01° step size and $2\theta$ of 10° to 70°.

In one embodiment, the nano-silicon particles may have an FWHM (full width at half maximum) value of the X-ray diffraction angle ($2\theta$) of 0.40° to 0.80°, preferably 0.52° to 0.68°, or 0.59° to 0.71°, at the (111) and (220) planes in X-ray diffraction analysis using CuK$\alpha$-rays of 1.54Å to 2.0Å. Under this condition, the anode material can secure high capacity and high output of the nano-silicon particles and can significantly suppress fracture of the silicon particles upon charging/discharging.

In one embodiment, the nano-silicon particles may have an average particle diameter of 50 nm to 500 nm. In another embodiment, the nano-silicon particles may have an average particle diameter (d50) of 500 nm or less, more preferably 160 nm to 260 nm, 180 nm to 230 nm, 190 nm to 220 nm, or 200 nm to 220 nm. In addition, controlling the maximum average particle diameter (Dmax) of the nano-silicon particles is also important. For example, the nano-silicon particles may have a maximum average particle diameter (Dmax) of 380 nm or less, preferably 320 nm to 360 nm, more preferably 300 nm to 340 nm. A lower Dmax indicates a higher viscosity of the nano-silicon slurry, and the viscosity of the nano-silicon slurry may be controlled to 6,500 cP or less (at 25°C).

For example, upon expansion of the spherical nano-silicon particles having a radius r to 4 times in volume, the

expanded nano-silicon particles may have a radius r' equal to 1.5874*r. The radius r' of the expanded nano-silicon particles may be deduced from the formula: $(4/3)*\pi*(r')^3 = 4*(4/3)*\pi*(r)^3$ ($r' = (\sqrt[3]{4})*r \approx 1.5874*r$).

In addition, the number of nano-silicon particles packed in the first hollow portion may be deduced in consideration of the particle-packing rate ($\pi*(\sqrt{3}/2) \approx 0.7405$) in the hexagonal close packed or face-centered cubic structure.

In one embodiment, when the nano-silicon particles having a radius (r) of 100 nm are expanded 4 times in volume, the expanded nano-silicon particles may have a radius (r') of about 158 nm (158.74 nm). In another embodiment, when the nano-silicon particles having a radius (r) of 150 nm are expanded 4 times in volume, the expanded nano-silicon particles may have a radius (r') of about 238 nm (238.11 nm).

In one embodiment, the primary particle may include first and second nano-silicon particles having radii of ri and $r_2$, respectively. $r_1$ and $r_2$ may be the same or different from each other.

In one embodiment, the number ($n_1$) of the first nano-silicon particles and the number ($n_2$) of the second nano-silicon particles packed in the first hollow portion having a radius R in the primary particle may satisfy Formula 1.

[Formula 1]

$$n_1 \left(\frac{r_1'}{R}\right)^3 + n_2 \left(\frac{r_2'}{R}\right)^3 \leq 1$$,

where $r_1'$ denotes the radius of first expanded nano-silicon particles, $r_2'$ denotes the radius of second expanded nano-silicon particles, and R is the radius of the first hollow portion, $r_1'$ and $r_2'$ being $1.5874*r_1$ and $1.5874*r_2$, respectively.

When the numbers of first and second nano-silicon particles packed in the first hollow portion are set under the condition of Formula 1, it is possible to prevent cracking or fracture of the first hollow core (or the anode material) due to expansion of the nano-silicon particles.

In one embodiment, the number of nano-silicon particles packed in the first hollow portion of the primary particle may range from 50 to 10,000. Under this condition, the anode material allows easy control of the number of nano-silicon particles and can prevent fracture of the first hollow core due to expansion of the nano-silicon particles while securing high capacity and high output of the anode material. For example, the number of nano-silicon particles packed in the first hollow portion of the primary particle may range from 150 to 10,000. For example, the number of nano-silicon particles packed in the first hollow portion may range from 150 to 80,000. In another embodiment, the number of nano-silicon particles packed in the first hollow portion may range from 150 to 6,000, 200 to 2,000, or 200 to 1,600.

In another embodiment, the first hollow portion may have an average diameter of 2 μm to 4 μm (or a radius of 1 μm to 2 μm), and the total number of first nano-silicon particles having an average particle diameter (d50) of 100 nm and the second nano-silicon particles having an average particle diameter (d50) of 150 nm in the first hollow portion may range from 150 to 5,000. Under this condition, the anode material allows easy control of the number of nano-silicon particles, can prevent fracture of the hollow core due to expansion of the nano-silicon particles, and can exhibit good properties in terms of high capacity and high output. For example, the total number of first nano-silicon particles having an average particle diameter (d50) of 100 nm and the second nano-silicon particles having an average particle diameter (d50) of 150 nm in the first hollow portion may range from 150 to 2,000, 200 to 2,000, or 200 to 1,600.

For example, in the first hollow portion having an average diameter of 2 μm to 4 μm (or a radius of 1 μm to 2 μm), the number of first nano-silicon particles (radius: 90 nm to 110 nm) may range from 140 to 1,300 and the number of second nano-silicon particles (radius: 140 nm to 160 nm) may range from 30 to 360. Under this condition, the anode material allows easy control of the number of nano-silicon particles, can prevent fracture of the first hollow core due to expansion of the nano-silicon particles, and can exhibit good properties in terms of high capacity and high output.

In one embodiment, the primary particle may have a nano-silicon particle-packing density of 75% or less. The nano-silicon particle-packing density may mean the number of nano-silicon particles actually packed in the first hollow portion relative to the maximum number of nano-silicon particles capable of being packed in the first hollow portion. With the above condition of packing density, the anode material can secure good properties in terms of high capacity and high output without fracture of the anode material due to expansion of the nano-silicon particles. For example, the primary particle may have a nano-silicon particle-packing density of 20% to 50%. In another example, the primary particle may have a nano-silicon particle-packing density of 20% to 25%.

In one embodiment, the secondary particle may have a primary particle-packing density of 75% or less. The primary particle-packing density may mean the number of primary particles actually packed in the second hollow portion relative to the maximum number of primary particles capable of being packed in the second hollow portion. With the above condition of packing density, the anode material can secure good properties in terms of high capacity and high output without fracture of the anode material due to expansion of the nano-silicon particles. For example, the secondary particle

may have a primary particle-packing density of 20% to 60%. In another example, the secondary particle may have a primary particle-packing density of 20% to 35%.

In one embodiment, the nano-silicon particles may be present in an amount of 25 wt% to 80 wt% based on the total weight of the anode material. Within this range, the anode material can have good properties in terms of miscibility, durability, high capacity, and high output. For example, the nano-silicon particles may be present in an amount of 25 wt% to 70 wt%. In another embodiment, the nano-silicon particles may be present in an amount of 25 wt% to 65 wt%, 25 wt% to 60 wt%, or 30 wt% to 50 wt%. For example, the nano-silicon particles may be present in an amount of 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80 wt%.

**Secondary particle**

The secondary particle includes a second hollow core 22 having a second hollow portion 24 therein and at least one primary particle 10 packed in the second hollow portion 24.

The secondary particle is formed by sintering a hard coating material, a medium coating material, or a soft coating material described below.

The secondary particle may have a spherical shape or an elliptical shape. For example, the secondary particle may have a spherical shape.

The second hollow portion has a larger diameter than the first hollow portion.

In one embodiment, the second hollow portion may have an average diameter of 3 μm to 25 μm. Under this condition, the second hollow portion can prevent fracture of the anode material due to expansion of the primary particle while securing long lifespan of the anode material. For example, the second hollow portion may have an average diameter of 5 μm to 20 μm, 6 μm to 20 μm, 10 μm to 20 μm, 6 μm to 18 μm, 12 μm to 18 μm, or 14 μm to 18 μm. For example, the second hollow portion may have an average diameter of 3, 4, 5, 6, 7, 8, 9, 10, 11, 12, 13, 14, 15, 16, 17, 18, 19, 20, 21, 22, 23, 24 or 25 μm.

For example, the second hollow portion may have a radius of 1.5 μm to 12.5 μm, 2 μm to 10 μm, 3 μm to 9 μm, or 7 μm to 9 μm.

In one embodiment, the second hollow core may have a thickness of 5 nm to 500 nm. Under this condition, the anode material can exhibit good hardness and mechanical strength to prevent damage to or fracture of the anode material even upon expansion of the primary particle. For example, the second hollow core may have a thickness of 5 nm to 250 nm, 10 nm to 300 nm, or 10 nm to 50 nm.

In one embodiment, the second hollow core has a different hardness than the first hollow core. Under this condition, the anode material can exhibit good properties in terms of electrical conductivity, hardness, and mechanical strength, can prevent damage to or fracture of the second hollow core (or the anode material) upon expansion of the primary particle (or the nano-silicon particles) during charging of a secondary battery, thereby preventing reduction in capacity while securing long lifespan.

For example, the second hollow core has different density, specific surface area and resistivity than the first hollow core.

In one embodiment, the second hollow core may have a density of 1.8 g/cm$^3$ to 2.5 g/cm$^3$. Under this condition, the anode material is lightweight and can exhibit good structural stability. For example, the second hollow core may have a density of 1.8 g/cm$^3$ to 2.1 g/cm$^3$.

In another embodiment, the second hollow core may have a density of less than 1.8 g/cm$^3$. Under this condition, the anode material is lightweight and can exhibit good structural stability. For example, the second hollow core may have a density of 0.3 g/cm$^3$ to 1.7 g/cm$^3$.

In one embodiment, the second hollow core may have a specific surface area (BET) of 100 m$^2$/g or less. Under this condition, the anode material can exhibit good structural stability.

In another embodiment, the second hollow core may have a specific surface area (BET) of greater than 100 m$^2$/g. Under this condition, the anode material can exhibit good structural stability. For example, the anode material may have a specific surface area (BET) of 110 m$^2$/g to 500 m$^2$/g.

In one embodiment, the second hollow core may have a purity (impurity content) of 100 ppm or less. Under this condition, the anode material can exhibit good electrical conductivity.

In another embodiment, the second hollow core may have a purity (impurity content) of 500 ppm or more. Under this condition, the anode material can exhibit good electrical conductivity. For example, the second hollow core may have an impurity content of 500 ppm to 3,000 ppm.

In one embodiment, the second hollow core may have a resistivity of 3 μΩ·m to 5 μΩ·m. Under this condition, the anode material can exhibit good electrical conductivity.

In another embodiment, the second hollow core may have a resistivity of 20 μΩ·m or more. Under this condition, the anode material can exhibit good electrical conductivity. For example, the second hollow core may have a resistivity of

20 $\mu\Omega\cdot m$ to 80 $\mu\Omega\cdot m$.

In one embodiment, the second hollow core may have a pencil hardness of 4H or higher, as measured in accordance with ISO 15184. Under this condition, the second hollow core can exhibit good durability and strength, and it is possible to prevent damage to or fracture of the second hollow core (or the anode material) upon expansion of the nano-silicon particles due to intercalation of lithium ions thereinto. For example, the second hollow core may have a pencil hardness of 4H to 6H.

In another embodiment, the second hollow core may have a pencil hardness of less than 4H, as measured in accordance with ISO 15184. Under this condition, the second hollow core has good flexibility, and it is possible to prevent damage to or fracture of the second hollow core (or the anode material) upon expansion of the nano-silicon particles due to intercalation of lithium ions thereinto. For example, the second hollow core may have a pencil hardness of B to 3H. In another embodiment, the second hollow core may have a pencil hardness of 2H to 3H.

In one embodiment, the first hollow core may have a pencil hardness of 4H or higher and the second hollow core may have a pencil hardness of less than 4H, as measured in accordance with ISO 15184. For example, the first hollow core may have a pencil hardness of 4H to 6H and the second hollow core may have a pencil hardness of B to 1H.

In one embodiment, the first hollow core may have a pencil hardness of less than 4H and the second hollow core may have a pencil hardness of 4H or higher, as measured in accordance with ISO 15184. For example, the first hollow core may have a pencil hardness of B to 1H and the second hollow core may have a pencil hardness of 4H to 6H.

In one embodiment, the second hollow core may be present in an amount of 1 wt% to 40 wt% based on the total amount of the anode material. Within this range, the anode material can exhibit good properties in terms of durability, structural stability, and electrical properties. For example, the second hollow core may be present in an amount of 1 wt% to 30 wt%, 1 wt% to 25 wt%, 1 wt% to 20 wt%, 1 wt% to 15 wt%, 2 wt% to 15 wt%, 3 wt% to 15 wt%, or 5 wt% to 15 wt%. For example, the second hollow core may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%.

In one embodiment, the anode material may include the second hollow core and the first hollow core in a weight ratio of 1:0.5 to 1:6. Within this range, the anode material can exhibit good properties in terms of durability, structural stability, long lifespan, high output and electrical properties. For example, the anode material may include the second hollow core and the first hollow core in a weight ratio of 1:1 to 1:5, 1:1.5 to 1:5, 1:2 to 1:4, or 1:2 to 1:3.

In one embodiment, the secondary particle may include primary particles (1) and (2) having radii $a_1$ and $a_2$, respectively. The radius $a_1$ of the primary particle (1) is the same as or different from the radius $a_1$ of the primary particle (2).

In one embodiment, the numbers of the primary particle (1) and the primary particle (2) packed in the second hollow portion may satisfy Formula 2.

[Formula 2]

$$n_3\left(\frac{a_1}{b}\right)^3 + n_4\left(\frac{a_2}{b}\right)^3 \leq 1,$$

where $a_1$ and $n_3$ denote the radius and the number of primary particles (1), respectively; $a_2$ and $n_4$ denote the radius and the number of primary particles (2), respectively; and b denotes the radius of the second hollow portion.

With the numbers of primary particles (1) and primary particle (2) packed in the second hollow portion of the secondary particle under the conditions of Formula 2, it is possible to prevent cracking or fracture of the second hollow core (or the anode material) due to expansion of the primary particle.

In one embodiment, the number of primary particles packed in the second hollow portion may range from 5 to 500. Under this condition, the anode material can exhibit good properties in terms of high output, long lifespan, and electrical properties. For example, the number of primary particles may range from 5 to 300, specifically 100 to 300.

In one embodiment, the second hollow portion may have an average diameter of 6 $\mu$m to 18 $\mu$m and may include 13 to 445 primary particles (1) having an average particle diameter (d50) of 2 $\mu$m to 3 $\mu$m (or a radius of 1.0 $\mu$m to 1.5 $\mu$m) and 1 to 125 primary particles (2) having an average particle diameter (d50) of 3 $\mu$m to 4 $\mu$m (or a radius of 1.5 $\mu$m to 2.0 $\mu$m). Under this condition, the anode material allows easy control of the number of primary particles, can prevent fracture of the second hollow core due to expansion of the primary particles (or the nano-silicon particles) while securing high capacity and high output of the anode material.

**First coating layer**

In one embodiment, the anode material may further include a first coating layer formed on an outer circumferential surface of the second hollow core.

In one embodiment, the first coating layer may include at least one of a hard coating layer, a soft coating layer and a medium coating layer.

The first coating layer may have a different hardness than the second hollow core. Under this condition, the anode material can prevent reduction in capacity by preventing damage to or fracture of the anode material upon expansion of the nano-silicon particles while securing long lifespan.

In one embodiment, the first coating layer may have a thickness of 5 nm to 150 nm. Under this condition, the anode material can secure high output and long lifespan by preventing cracking and fracture of the anode material due to expansion of the second hollow core (or the anode material). For example, the first coating layer may have a thickness of 5 nm to 120 nm, 5 nm to 100 nm, 5 nm to 90 nm, 5 nm to 60 nm, 5 nm to 80 nm, 10 nm to 80 nm, 10 nm to 50 nm, 10 nm to 40 nm, or 10 nm to 30 nm.

(1) Hard coating layer: The hard coating layer may be formed by sintering a hard coating material described below. With the hard coating layer, the anode material can have good strength and durability to prevent fracture of the anode material upon expansion of the nano-silicon particles, can exhibit good electrical conductivity and long lifespan, and can prevent reduction in capacity.

In one embodiment, the hard coating layer may have a thickness of 5 nm to 100 nm. Under this condition, the hard coating layer can have good hardness and mechanical strength to prevent damage to or fracture of the anode material upon expansion of the primary particle (or the nano-silicon particles). For example, the hard coating layer may have a thickness of 5 nm to 60 nm, 5 nm to 30 nm, 5 nm to 20 nm, 5 nm to 15 nm, or 5 nm to 10 nm.

In one embodiment, the hard coating layer may have a density of 1.8 g/cm$^3$ to 2.5 g/cm$^3$. Under this condition, the anode material is lightweight and can exhibit good structural stability. For example, the hard coating layer may have a density of 1.8 g/cm$^3$ to 2.1 g/cm$^3$.

In one embodiment, the hard coating layer may have a specific surface area (BET) of 100 m$^2$/g or less. Under this condition, the anode material can exhibit good structural stability.

In one embodiment, the hard coating layer may have a purity (impurity content) of 100 ppm or less. Under this condition, the anode material can exhibit good electrical conductivity.

In one embodiment, the hard coating layer may have a resistivity of 3 $\mu\Omega\cdot$m to 5 $\mu\Omega\cdot$m. Under this condition, the anode material can exhibit good electrical conductivity.

In one embodiment, the hard coating layer may have a pencil hardness of 4H or higher, as measured in accordance with ISO 15184. Under this condition, the hard coating layer has good durability and strength, and can prevent damage to or fracture of the second hollow core (or the anode material) upon expansion of the primary particle (or the nano-silicon particles). For example, the hard coating layer may have a pencil hardness of 4H to 6H.

In one embodiment, the hard coating layer has a higher hardness than the medium coating layer.

In one embodiment, the hard coating layer may be present in an amount of 1 wt% to 20 wt% based on the total weight of the anode material. Within this range, the anode material can exhibit good properties in terms of durability, structural stability, and electrical properties. For example, the hard coating layer may be present in an amount of 1 wt% to 15 wt%, 1 wt% to 10 wt%, 1 wt% to 8 wt%, 2 wt% to 8 wt%, 2 wt% to 5 wt%.

For example, the first coating layer includes the hard coating layer in an amount of 1, 2, 3, 4, 5, 6, 7, 8, 9, 10, 11, 12, 13, 14, 15, 16, 17, 18, 19 or 20 wt%.

(2) Medium coating layer: In one embodiment, the medium coating layer may be formed by heat treatment of at least one of hydrocarbon gas and carbon black. For example, the hydrocarbon gas may include at least one of methane ($CH_4$), ethane ($C_2H_6$), propane ($C_3H_8$), butane ($C_4H_{10}$), and pentane ($C_5H_{12}$).

The medium coating layer may be a non-crystalline or crystalline layer. Under this condition, the anode material can exhibit high strength and durability.

In one embodiment, the medium coating layer may have a pencil hardness of 2H to less than 4H, as measured in accordance with ISO 15184. Under this condition, the medium coating layer can prevent fracture of the second hollow core due to expansion of the primary particles (or the nano-silicon particles) to secure long lifespan of the anode material.

In one embodiment, the medium coating layer may have a thickness of 5 nm to 100 nm. Under this condition, the medium coating layer can very effectively relieve expansion of the second hollow core due to expansion of the primary particles (or the nano-silicon particles) to prevent damage to or fracture of the second hollow core while securing long lifespan. For example, the medium coating layer may have a thickness of 5 nm to 60 nm, 5 nm to 30 nm, or 5 nm to 20 nm.

In one embodiment, the medium coating layer may have a density of less than 1.8 g/cm$^3$. Under this condition, the anode material is lightweight and can exhibit good structural stability. For example, the medium coating layer may have a density of greater than 1.5 g/cm$^3$ to 1.7 g/cm$^3$.

In one embodiment, the medium coating layer may have a specific surface area (BET) of 100 m$^2$/g to 200 m$^2$/g. Under this condition, the anode material can exhibit good structural stability.

In one embodiment, the medium coating layer may have a purity (impurity content) of 500 ppm or less. Under this condition, the anode material can exhibit good electrical conductivity.

In one embodiment, the medium coating layer may have a resistivity of 20 $\mu\Omega\cdot$m to 40 $\mu\Omega\cdot$m. Under this condition,

the anode material can exhibit good electrical conductivity.

In one embodiment, the medium coating layer may be present in an amount of 1 wt% to 20 wt% based on the total weight of the anode material. Within this range, the medium coating layer has good electrical conductivity, can prevent cracking and fracture of the second hollow core due to expansion of the primary particles (or the nano-silicon particles), and can minimize reduction in capacity to secure long lifespan. For example, the medium coating layer may be present in an amount of 1 wt% to 15 wt%, 1 wt% to 10 wt%, 2 wt% to 8 wt%, or 2 wt% to 5 wt%. For example, the first coating layer may include the medium coating layer in an amount of 1, 2, 3, 4, 5, 6, 7, 8, 9, 10, 11, 12, 13, 14, 15, 16, 17, 18, 19 or 20 wt%.

(3) Soft coating layer: In one embodiment, the soft coating layer may be formed by sintering a soft coating material. In one embodiment, the soft coating material may include at least one of pitch, coke and carbon precursors formed of other organic materials. For example, the pitch may include at least one of pyrolysis fuel oil pitch and coal tar pitch.

In one embodiment, the soft coating layer may have a pencil hardness of B to 3H, as measured in accordance with ISO 15184. Under this condition, the soft coating layer can prevent fracture of the anode material due to expansion of the nano-silicon particles to secure long lifespan. For example, the medium coating layer may have a pencil hardness of B to 1H.

In one embodiment, the soft coating layer may have a thickness of 5 nm to 100 nm. Under this condition, the soft coating layer can very effectively relieve expansion of the second hollow core due to expansion of the primary particles (or the nano-silicon particles) to prevent damage to or fracture of the second hollow core while securing long lifespan of the anode material. For example, the soft coating layer may have a thickness of 5 nm to 80 nm, 5 nm to 60 nm, 5 nm to 30 nm, 5 nm to 20 nm.

In one embodiment, the soft coating layer may have a density of 1.5 g/$cm^3$ or less. Under this condition, the anode material is lightweight and can exhibit good structural stability. For example, the soft coating layer may have a density of 0.3 g/$cm^3$ to 1.5 g/$cm^3$.

In one embodiment, the soft coating layer may have a specific surface area (BET) of 300 $m^2$/g or more. Under this condition, the anode material can exhibit good structural stability. For example, the anode material may have a specific surface area (BET) of 300 $m^2$/g to 2,500 $m^2$/g.

In one embodiment, the soft coating layer may have a purity (impurity content) of 1,000 ppm or more. Under this condition, the anode material can exhibit good electrical conductivity. For example, the soft coating layer may have an impurity content of 1,000 ppm to 5,000 ppm.

In one embodiment, the soft coating layer may have a resistivity of 50 $\mu\Omega\cdot m$ or more. Under this condition, the anode material can exhibit good electrical conductivity. For example, the soft coating layer may have a resistivity of 50 $\mu\Omega\cdot m$ to 300 $\mu\Omega\cdot m$.

In one embodiment, the soft coating layer may be present in an amount of 1 wt% to 20 wt% based on the total weight of the anode material. Within this range, the soft coating layer can prevent fracture of the second hollow core due to expansion of the primary particles (or the nano-silicon particles), and can minimize reduction in capacity to secure long lifespan. For example, the soft coating layer may be present in an amount of 1 wt% to 15 wt%, 1 wt% to 10 wt%, 2 wt% to 8 wt%, or 2 wt% to 5 wt%.

For example, the first coating layer may include the soft coating layer in an amount of 1, 2, 3, 4, 5, 6, 7, 8, 9, 10, 11, 12, 13, 14, 15, 16, 17, 18, 19 or 20 wt%.

In one embodiment, the first coating layer of the anode material may include the hard (or soft) coating layer and the medium coating layer sequentially formed.

In one embodiment, the hard coating layer may have higher crystallinity than the medium coating layer and the soft coating layer, and the medium coating layer may have higher crystallinity than the soft coating layer. Here, crystallinity can be confirmed through typical XRD (X-ray diffraction) analysis. Under this condition, the anode material can exhibit good properties in terms of electrical conductivity, strength and high output.

In one embodiment, the first coating layer may include the hard (or soft) coating layer and the medium coating layer in a weight ratio of 1:0.5 to 1:3. Within this range, the anode material has good electrical conductivity, can prevent cracking and fracture of the second hollow core due to expansion of the primary particles (or the nano-silicon particles), and can minimize reduction in capacity to secure long lifespan. For example, the first coating layer may include the hard (or soft) coating layer and the medium coating layer in a weight ratio of 1:1 to 1:3 or 1:1.5 to 1:2.5.

## Method of preparing silicon carbon composite anode material

Another aspect of the present invention relates to a method of preparing the silicon carbon composite anode material. In one embodiment, the anode material preparation method may include: (S10) drying a nano-silicon slurry to prepare dried powder; (S20) preparing a first mixture including the dried powder and a first coating material; and (S30) preparing a first intermediate material using the first mixture and a second coating material.

In one embodiment, the first coating material includes a hard coating material or a soft coating material, and the

second coating material includes a hard coating material, a medium coating material, or a soft coating material, in which the hard coating layer has a higher hardness than the medium coating layer, and the medium coating layer has a higher hardness than the soft coating layer.

In one embodiment, the first intermediate material includes: a primary particle including a first hollow core having a first hollow portion therein and nano-silicon particles packed in the first hollow portion; and a secondary particle including a second hollow core having a second hollow portion therein and at least one primary particle packed in the second hollow portion, wherein the first hollow core has a different hardness than the second hollow core.

**(S10) Dried powder preparation step**

In this step, a nano-silicon slurry is dried to prepare dried powder.

In one embodiment, the nano-silicon slurry may include nano-silicon particles. In one embodiment, the nano-silicon slurry may be prepared by dispersing silicon powder and a dispersant in a first solvent to prepare a dispersion, followed by grinding the dispersion.

In one embodiment, the first solvent may include at least one of water, ethanol, isopropyl alcohol, and potassium hydroxide (KOH). The first solvent can secure good miscibility and dispersibility of the nano-silicon slurry without oxidation of the silicon powder.

In one embodiment, the dispersant may include at least one of poly(vinyl pyrrolidone), nitrile butadiene rubber, hydrogenated nitrile butadiene rubber, stearic acid, palmitic acid, oleic acid, and lauric acid. In another example, the dispersant may include at least one of stearic acid, pyrolysis fuel oil pitch, coal tar pitch, coal tar, glucose, sucrose, polyimide, polyacrylic acid (PAA), and polyvinyl alcohol (PVA). The dispersant can secure good dispersion of the silicon powder while allowing easy preparation of the nano-silicon slurry including the nano-silicon particles. For example, the dispersant may include stearic acid. For example, the dispersant may be a mixture of stearic acid and N-methyl pyrrolidone (NMP).

In one embodiment, the nano-silicon slurry may include 100 parts by weight of the silicon powder, 5 to 1,500 parts by weight of the first solvent, and 0.1 to 30 parts by weight of the dispersant. Under this condition, the nano-silicon slurry can secure good miscibility and dispersion of the nano-silicon particles and can be easily prepared. For example, the nano-silicon slurry may include 100 parts by weight of the silicon powder, 800 to 1,000 parts by weight of the first solvent, and 0.5 to 25 parts by weight of the dispersant.

For example, the nano-silicon slurry may be prepared by adding the dispersant to the first solvent in amounts as above, mixing the dispersant with the first solvent, and mixing the silicon powder with the mixture to prepare a dispersion, followed by grinding the dispersion.

In one embodiment, grinding may be performed by milling. In one embodiment, milling may be performed using a bead-mill, a ball-mill, a high energy ball-mill, a planetary mill, a stirred ball-mill, a vibration mill, or the like.

For example, the ball-mill may be formed of a chemically inert material that does not react with the silicon powder and other organic components. For example, the ball-mill may include zirconia ($ZrO_2$). In one embodiment, the ball mill may have an average particle diameter of 0.1 mm to 1 mm. Under this condition, the nano-silicon particles can be easily prepared.

For example, a weight ratio of zirconia beads to the silicon powder (zirconia beads/silicon powder, ball per ratio) may range from 1/3.5 to 1/10. In addition, upon dispersion of the dispersant, a rotor of the grinding machine may be rotated at 2,200 rpm to 2,600 rpm.

In one embodiment, the silicon powder may have an average particle diameter (d50) of 0.3 μm to 3.5 μm. Under this condition, the silicon powder can be easily mixed and ground, and the nano-silicon particles having a desired average particle diameter can be easily prepared. For example, the silicon powder may have an average particle diameter (d50) of 0.5 μm to 2.5 μm. In another example, the silicon powder may have an average particle diameter (d50) of 0.3 μm to 1.8 μm.

In one embodiment, the silicon powder may have a maximum particle diameter (Dmax) of 10 μm or less. Under this condition, the nano-silicon particles having a desired average particle diameter can be easily prepared.

In one embodiment, the silicon powder may be present in an amount of 6.5 wt% to 17.8 wt% in the nano-silicon slurry. Under this condition, the nano-silicon slurry can secure good miscibility and workability.

In one embodiment, the nano-silicon slurry may have a viscosity of 2,000 cP to 6,500 cP (at 25°C). Under this condition, the nano-silicon slurry can secure good miscibility and dispersion, and the number of nano-silicon particles packed in the hollow portion can be easily controlled.

In one embodiment, the nano-silicon particles may have an average particle diameter of 50 nm to 500 nm. In another embodiment, the nano-silicon particles may have an average particle diameter (d50) of 500 nm or less, more preferably 160 nm to 260 nm, 180 nm to 230 nm, 190 nm to 220 nm, or 200 nm to 220 nm. In addition, controlling the maximum average particle diameter (Dmax) of the nano-silicon particles is very important. For example, the nano-silicon particles may have a maximum particle diameter (Dmax) of 380 nm or less, preferably 320 nm to 360 nm. More preferably, the nano-silicon particles have a maximum particle diameter (Dmax) of 300 nm to 340 nm. A lower Dmax value can cause

increase in viscosity of the nano-silicon slurry and the viscosity of the nano-silicon slurry may be adjusted to 6,500 cP or less (at 25°C).

In one embodiment, the nano-silicon particles may have a spherical, polyhedral, elliptical or amorphous shape. For example, the nano-silicon particles may have a spherical shape.

The particle size of the anode material can be easily adjusted by drying the nano-silicon slurry. For example, drying may be performed using a spray dryer or the like. For example, spray drying may be performed using a spray dryer provided with a single-fluid nozzle, a two-fluid nozzle, or a four-fluid nozzle.

In one embodiment, the dried powder may have a spherical, polyhedral or elliptical shape. For example, the dried powder may have a spherical shape.

In one embodiment, the dried powder may have an average particle diameter (or size) of 0.1 μm to 15 μm. Under this condition, the dried powder can exhibit good miscibility and formability.

In one embodiment, as prepared by spray-drying the nano-silicon slurry using a single-fluid nozzle at an air flow rate of 650 sccm to 850 sccm with the spray dryer set to have an outlet temperature of 70°C to 130°C, the dried powder may have an average particle diameter of 7 μm to 14 μm. In another embodiment, as prepared by spray drying the nano-silicon slurry using a four-fluid nozzle, the dried powder may have an average particle diameter of 0.1 μm to 8 μm.

**(S20) First mixture preparation step**

In this step, a first mixture including the dried powder and a first coating material is prepared.

With the second coating material, the first hollow core can be easily formed. In one embodiment, the first coating material includes a hard coating material or a soft coating material.

The hard coating material may include a carbon material. The hard coating material forms the first hollow core and can secure good hardness and strength to prevent fracture of the anode material upon expansion of the nano-silicon particles while exhibiting good electrical properties.

In one embodiment, the hard coating material may have a pencil hardness of 4H or higher, as measured in accordance with ISO 15184. Under this condition, the hard coating material can prevent fracture of the anode material upon expansion of the nano-silicon particles while securing good properties in terms of high output and electrical properties. For example, the hard coating material may have a pencil hardness of 4H to 6H. For example, the hard coating material may have a pencil hardness of 4H to 6H. For example, the hard coating material may include a carbon material having a pencil hardness of 4H to 6H.

For example, the hard coating material may include NanoMollisAdamas products available from Lemon Energy Co., Ltd.

The hard coating material may have an amorphous phase. In addition, the hard coating material is prepared through self-assemblage and exhibits good properties in terms of isotropic properties and heat stability to prevent structural change at high temperature (at about 3,000°C).

The hard coating material may have high-gas impermeability while exhibiting good chemical resistance and electrical conductivity. In addition, the hard coating material is dust free and has a purity (impurity content) of 5 ppm or less or a purity (impurity content) of 2 ppm or less. Under this condition, the hard coating material can have good strength and electrical properties, and the anode material can have good electrical conductivity.

In one embodiment, the hard coating material may have a resistivity of 3 μΩ·m to 5 μΩ·m. Under this condition, the anode material can exhibit good electrical conductivity.

In one embodiment, the hard coating material may have an average particle diameter (d50) of 3 nm to 2.5 μm. Under this condition, the first hollow core can be easily formed by sintering described below. For example, the hard coating material may have an average particle diameter (d50) of 5 nm to 1,000 nm, 10 nm to 500 nm, or 15 nm to 200 nm.

The soft coating material may be the same as described above. In one embodiment, the soft coating material may include at least one of pitch, coke and carbon precursors formed of other organic materials. For example, the pitch may include at least one of pyrolysis fuel oil pitch and coal tar pitch.

The soft coating material may form the first hollow core and can prevent fracture of the anode material upon expansion of the nano-silicon particles while securing good electrical properties.

In one embodiment, the soft coating material may have an average particle diameter (d50) of 3 nm to 2.5 nm. Under this condition, the first hollow core can be easily formed by sintering under conditions described below. For example, the soft coating material may have an average particle diameter (d50) of 5 nm to 1,000 nm, 10 nm to 500 nm, or 15 nm to 200 nm.

In one embodiment, the first mixture may further include a solvent. In one embodiment, the solvent may include at least one of water, an alcohol-based solvent, an amide-based solvent, an ester-based solvent, and a hydrocarbon-based solvent. The solvent serves to secure good miscibility and workability. The alcohol-based solvent may include at least one of methanol, ethanol, isopropanol, and butanol. The amide-based solvent may include at least one of N-methyl-2-pyrrolidone (NMP), dimethyl acetamide (DMAC), and dimethyl formamide (DMF). The hydrocarbon-based solvent may

include toluene and/or xylene.

In one embodiment, the first mixture may include 80 wt% to 99 wt% of the dried powder and 1 wt% to 20 wt% of the first coating material. Within this range, the first mixture can have good miscibility and dispersion.

In one embodiment, the method may further include pressing the first mixture after the first mixture is prepared. For example, a pressed product may be prepared by pressing (uniaxially pressing) the first mixture at 10 atm to 60 atm in one direction. In preparation of the pressed product under this pressing condition, the anode material can secure good properties in terms of electrical properties, long lifespan and capacity through adjustment of the inner porosity of the anode material.

**(S30) First intermediate material preparation step**

In this step, a first intermediate material is prepared using the first mixture and a second coating material.

The second coating material includes a hard coating material, a medium coating material, or a soft coating material. With the second coating material, the second hollow core can be easily formed.

In one embodiment, the first intermediate material may be prepared through heat treatment of the first mixture and the hard coating material as the second coating material.

In one embodiment, the first intermediate material may be prepared by heat treatment (sintering) of a second mixture including the first mixture and the hard coating material at 900°C to 1,050°C. Under this condition, the second hollow core can be easily formed.

The hard coating material can secure good hardness and strength to prevent fracture of the anode material upon expansion of the nano-silicon particles while exhibiting good electrical properties.

For example, the hard coating material may include a carbon material.

In one embodiment, the hard coating material may have a pencil hardness of 4H or higher, as measured in accordance with ISO 15184. Under this condition, the hard coating material can prevent fracture of the anode material upon expansion of the nano-silicon particles. For example, the hard coating material may have a pencil hardness of 4H to 6H. For example, the hard coating material may include a carbon material having a pencil hardness of 4H to 6H.

For example, the hard coating material may include NanoMollisAdamas products available from Lemon Energy Co., Ltd

The hard coating material may have an amorphous phase. In addition, the hard coating material is prepared through self-assemblage and exhibits good isotropic properties and good heat stability to prevent structural change at high temperature (at about 3,000°C).

The hard coating material may have high-gas impermeability while exhibiting good chemical resistance and electrical conductivity. In addition, the hard coating material is dust free and has a purity (impurity content) of 5 ppm or less or a purity (impurity content) of 2 ppm or less. Under this condition, the hard coating material can have good strength and electrical properties, and the anode material can have good electrical conductivity.

In one embodiment, the hard coating material may have a resistivity of 3 to 5 $\mu\Omega\cdot m$. Under this condition, the anode material can exhibit good electrical conductivity.

In one embodiment, the hard coating material may have an average particle diameter (d50) of 3 nm to 2.5 $\mu m$. Under this condition, the first intermediate material can be easily formed. For example, the hard coating material may have an average particle diameter (d50) of 5 nm to 500 nm, 10 nm to 500 nm, or 15 nm to 200 nm.

In another embodiment, the first intermediate material may be prepared through heat treatment of the first mixture using the medium coating material as a second coating material.

In one embodiment, the medium coating material may include at least one of hydrocarbon gas and carbon black. For example, the hydrocarbon gas may include at least one of methane ($CH_4$), ethane ($C_2H_6$), propane ($C_3H_8$), butane ($C_4H_{10}$), and pentane ($C_5H_{12}$).

For example, the first intermediate material may be prepared through heat treatment of the first mixture in a hydrocarbon gas atmosphere.

In one embodiment, heat treatment may be performed in a vacuum. Under this condition, the hydrocarbon gas can be evenly diffused between the first mixture particles in the chamber, thereby forming an even medium coating layer through heat treatment. For example, heat treatment may be performed in a vacuum of $10^{-1}$ torr to $10^{-6}$ torr.

In one embodiment, the first intermediate material preparation step may include: raising the inner temperature of the chamber receiving the first mixture therein to 850°C to 970°C while reducing the inner pressure of the chamber to $10^{-1}$ torr to $10^{-6}$ torr; introducing hydrocarbon gas into the depressurized chamber to contact the first mixture; and gradually increasing the inner pressure of the chamber while maintaining the raised temperature of the chamber to form the first intermediate material through pyrolysis of the hydrocarbon gas.

Upon decompression of the chamber under the above condition, the hydrocarbon gas can easily spread in the first mixture in the chamber, whereby the second hollow core can be uniformly formed. In particular, the hydrocarbon gas can easily spread between multiple first mixture particles, thereby forming a first intermediate material having good

uniformity of the second hollow core and a uniform thickness.

In addition, upon increase in inner pressure of the chamber under the above condition, the second hollow core with good uniformity is formed on the outer circumferential surface of the first mixture, thereby forming the first intermediate material. Here, the inner pressure of the chamber may be gradually increased from a vacuum. For example, the inner pressure of the chamber may be gradually increased to $10^1$ torr to $10^5$ torr to form the first intermediate material.

In another example, the first intermediate material may be prepared through heat treatment of a second mixture including the first mixture and carbon black. For example, heat treatment may be performed at 850°C to 970°C. Under this condition, the first intermediate material can be easily formed. For example, heat treatment may be performed at 890°C to 910°C.

In another embodiment, the first intermediate material may be prepared through heat treatment of a second mixture including the first mixture and the soft coating material as the second coating material. For example, the first intermediate material may be prepared by mixing the first mixture with the soft coating material to form the second mixture, followed by sintering the second mixture at 850°C to 975°C. By sintering under this temperature condition, the first intermediate material including the second hollow core can be easily formed.

In one embodiment, the soft coating material may include at least one of pitch, coke and carbon precursors formed of other organic materials. For example, the pitch may include at least one of pyrolysis fuel oil pitch and coal tar pitch.

In one embodiment, the soft coating material may have an average particle diameter (d50) of 0.03 μm to 10 μm. Under this condition, the first intermediate material can be easily formed. For example, the soft coating material may have an average particle diameter (d50) of 0.3 μm to 5 μm.

In one embodiment, the second mixture may be subjected to heat treatment at 850°C to 1,050°C. By sintering under this condition, the first intermediate material can be easily formed while securing durability and long lifespan. For example, the second mixture may be subjected to heat treatment at a temperature of 850°C to 1,050°C, 870°C to 1,050°C, 900°C to 1,000°C, 930 to 975°C, or 930 to 960°C.

For example, the second mixture may be subjected to heat treatment in an inert gas atmosphere. The inert gas may include nitrogen. For example, the first intermediate material may be prepared by dry grinding the sintered product using attachment mills, air classifier mills (ACM), jet mills, pin mills, and the like, followed by sieving the ground product.

In one embodiment, the first intermediate material preparation step may include subjecting the first mixture to primary sintering at 850°C to 950°C, and subjecting a second mixture, which includes the first mixture subjected to primary sintering and a third coating material, to secondary sintering at a temperature of greater than 950°C to 1,050°C. Under this condition, a first intermediate material of a secondary particle structure including a second hollow core having a second hollow portion therein and at least one primary particle packed in the second hollow portion can be easily formed. The third coating material may include the hard coating material or the soft coating material.

For example, primary sintering and secondary sintering may be performed in an inert gas atmosphere. The inert gas may include nitrogen.

For example, a primary particle structure including the first hollow core having the first hollow portion therein and nano-silicon particles packed in the first hollow portion may be formed upon primary sintering, and the secondary particle structure including the second hollow core having the second hollow portion therein and at least one primary particle packed in the second hollow portion may be formed upon secondary sintering.

In one embodiment, secondary sintering may be performed at a higher temperature than primary sintering. Under this condition, the primary particle and the secondary particle are formed to have higher strength, thereby securing good properties of the anode material in terms of durability, electrical properties, long lifespan, and capacity.

In one embodiment, the first intermediate material may be prepared by mixing a pressed product, which is prepared by pressing the first mixture subjected to primary sintering, with the hard coating material or the soft coating material to prepare a second mixture, followed by secondary sintering of the second mixture.

For example, the pressed product is prepared by pressing (or uniaxially pressing) the first mixture subjected to primary sintering at 10 atm to 60 atm in one direction. In preparation of the pressed product under this pressing condition, the anode material can secure good properties in terms of electrical properties, long lifespan and capacity through adjustment of the inner porosity of the anode material. Thereafter, a second mixture including the pressed product and the third coating material may be subjected to secondary sintering under this condition, thereby preparing the first intermediate material.

In one embodiment, the first intermediate material includes: the primary particle including the first hollow core having the first hollow portion therein and the nano-silicon particles packed in the first hollow portion; and the secondary particle including the second hollow core having the second hollow portion therein and at least one primary particle packed in the second hollow portion, wherein the first hollow core has a different hardness than the second hollow core.

In one embodiment, the anode material (or the first intermediate material) may include the second hollow core and the first hollow core in a weight ratio of 1:0.5 to 1:6. Within this range of weight ratio, the anode material can exhibit good properties in terms of durability, structural stability, long lifespan, high output, and electrical properties. For example, the

anode material may include the second hollow core and the first hollow core in a weight ratio of 1:1 to 1:5, 1:1.5 to 1:5, 1:2 to 1:4, or 1:2 to 1:3.

In one embodiment, the number of nano-silicon particles packed in the first hollow portion may be set such that the total volume of expanded nano-silicon particles formed by intercalation of lithium ions into the nano-silicon particles is equal to or less than the volume of the first hollow portion. Under this condition of the number of nano-silicon particles, it is possible to prevent cracking or fracture of the first hollow core (or the anode material) due to expansion of the nano-silicon particles.

For example, upon expansion of the spherical nano-silicon particles having a radius r to 4 times in volume, the expanded nano-silicon particles may have a radius r' equal to 1.5874*r. The radius r' of the expanded nano-silicon particles may be deduced from the formula: $(4/3)*\pi*(r')^3 = 4*(4/3)*\pi*(r)^3$ ($r' = (\sqrt[3]{4})*r \approx 1.5874*r$).

In addition, the number of nano-silicon particles packed in the first hollow portion may be deduced in consideration of the particle-packing rate ($\pi*(\sqrt{3}/2) \approx 0.7405$) in the hexagonal close packed or face-centered cubic structure.

In one embodiment, when the nano-silicon particles having a radius (r) of 100 nm are expanded 4 times in volume, the expanded nano-silicon particles may have a radius (r') of about 158 nm (158.74 nm). In another embodiment, when the nano-silicon particles having a radius (r) of 150 nm are expanded 4 times in volume, the expanded nano-silicon particles may have a radius (r') of about 238 nm (238.11 nm).

In one embodiment, the primary particle may include first and second nano-silicon particles having radii of ri and $r_2$, respectively. $r_1$ and $r_2$ may be the same or different from each other.

In one embodiment, the numbers ($n_1$, $n_2$) of first and second nano-silicon particles packed in the first hollow portion having a radius R in the primary particle may satisfy Formula 1.

[Formula 1]

$$n_1 \left(\frac{r_1'}{R}\right)^3 + n_2 \left(\frac{r_2'}{R}\right)^3 \leq 1$$

,

where $r_1'$ denotes the radius of the first expanded nano-silicon particles, $r_2'$ denotes the radius of the second expanded nano-silicon particles, and R is the radius of the first hollow portion, $r_1'$ and $r_2'$ being $1.5874*r_1$ and $1.5874*r_2$, respectively.

When the numbers of first and second nano-silicon particles packed in the first hollow portion are set under the conditions of Formula 1, it is possible to prevent cracking or fracture of the first hollow core (or the anode material) due to expansion of the nano-silicon particles.

In one embodiment, the number of nano-silicon particles packed in the first hollow portion of the primary particle may range from 50 to 10,000. Under this condition, the anode material allows easy control of the number of nano-silicon particles and can prevent fracture of the first hollow core due to expansion of the nano-silicon particles while securing high capacity and high output of the anode material. For example, the number of nano-silicon particles packed in the first hollow portion of the primary particle may range from 150 to 10,000. For example, the number of nano-silicon particles packed in the first hollow portion may range from 150 to 8,000. In another embodiment, the number of nano-silicon particles packed in the first hollow portion may range from 150 to 6,000, 200 to 2,000, or 200 to 1,600.

In another embodiment, the first hollow portion may have an average diameter of 2 μm to 4 μm (or a radius of 1 μm to 2 μm), and the total number of first nano-silicon particles having an average particle diameter (d50) of 90 nm to 110 nm and the second nano-silicon particles having an average particle diameter (d50) of 140 nm to 160 nm in the first hollow portion may range from 150 to 5,000. Under this condition, the anode material allows easy control of the number of nano-silicon particles, can prevent fracture of the hollow core due to expansion of the nano-silicon particles, and can exhibit good properties in terms of high capacity and high output. For example, the total number of first nano-silicon particles having a radius of 100 nm (an average particle diameter (d50) of 200 nm) and the second nano-silicon particles having a radius of 150 nm (an average particle diameter (d50) of 300 nm) in the first hollow portion may range from 150 to 2,000, 200 to 2,000, or 200 to 1,600.

For example, in the first hollow portion having an average diameter of 2 μm to 4 μm (or a radius of 1 μm to 2 μm), the number of first nano-silicon particles (radius: 90 nm to 110 nm, average particle diameter (d50): 180 nm to 220 nm) may range from 140 to 1,300 and the number of second nano-silicon particles (radius: 140 nm to 160 nm, average particle diameter (d50): 280 nm to 320 nm) may range from 30 to 360. Under this condition, the anode material allows easy control of the number of nano-silicon particles, can prevent fracture of the hollow core due to expansion of the nano-silicon particles, and can exhibit good properties in terms of high capacity and high output.

In one embodiment, the first hollow core may be present in an amount of 1 wt% to 40 wt% based on the total amount of the anode material (or the first intermediate material). Within this range, the anode material can exhibit good

properties in terms of durability, structural stability, and electrical properties. For example, the first hollow core may be present in an amount of 1 wt% to 30 wt%, 1 wt% to 25 wt%, 1 wt% to 20 wt%, 1 wt% to 15 wt%, 2 wt% to 15 wt%, 3 wt% to 15 wt%, or 5 wt% to 15 wt%.

In one embodiment, the nano-silicon particles may be present in an amount of 25 wt% to 80 wt% based on the total weight of the anode material (or the first intermediate material). Within this range, the anode material can have good properties in terms of miscibility, durability, high capacity, and high output. For example, the nano-silicon particles may be present in an amount of 25 wt% to 70 wt%. In another embodiment, the nano-silicon particles may be present in an amount of 25 wt% to 65 wt%, 25 wt% to 60 wt%, or 30 wt% to 50 wt%.

In one embodiment, the primary particle may have a nano-silicon particle-packing density of 75% or less. The nano-silicon particle-packing density may mean the number of nano-silicon particles actually packed in the first hollow portion relative to the maximum number of nano-silicon particles capable of being packed in the first hollow portion. With the above condition of packing density, the anode material can secure good properties in terms of high capacity and high output without fracture of the anode material due to expansion of the nano-silicon particles. For example, the primary particle may have a nano-silicon particle-packing density of 20% to 50%. In another example, the primary particle may have a nano-silicon particle-packing density of 20% to 25%.

In one embodiment, the secondary particle may have a primary particle-packing density of 75% or less. The nano-silicon particle-packing density may mean the number of primary particles actually packed in the second hollow portion relative to the maximum number of primary particles capable of being packed in the second hollow portion. With the above condition of packing density, the anode material can secure good properties in terms of high capacity and high output without fracture of the anode material due to expansion of the nano-silicon particles. For example, the secondary particle may have a nano-silicon particle-packing density of 20% to 60%. In another example, the secondary particle may have a nano-silicon particle-packing density of 20% to 35%.

In one embodiment, the secondary particle may include primary particles (1) and (2) having radii $a_1$ and $a_2$, respectively. The radius $a_1$ of the primary particle (1) is the same as or different from the radius $a_2$ of the primary particle (2).

In one embodiment, the numbers of primary particle (1) and primary particle (2) packed in the second hollow portion may satisfy Formula 2.

[Formula 2]

$$n_3\left(\frac{a_1}{b}\right)^3 + n_4\left(\frac{a_2}{b}\right)^3 \leq 1$$

,

where $a_1$ and $n_3$ denote the radius and the number of primary particles (1), respectively; $a_2$ and $n_4$ denote the radius and the number of primary particles (2), respectively; and b denotes the radius of the second hollow portion.

With the numbers of primary particles (1) and (2) packed in the second hollow portion of the secondary particle under the conditions of Formula 2, the second hollow core (or the anode material) can prevent cracking or fracture due to expansion of the primary particle.

In one embodiment, the number of primary particles packed in the second hollow portion may range from 5 to 500. Under this condition, the anode material can exhibit good properties in terms of high output, long lifespan, and electrical properties. For example, the number of primary particles may range from 5 to 300, specifically 100 to 300.

In one embodiment, the second hollow portion may have an average diameter of 6 μm to 18 μm (a radius of 3 μm to 9 μm) and may include 13 to 445 primary particles (1) having an average particle diameter (d50) of 2 μm to 3 μm (or a radius of 1.0 μm to 1.5 μm) and 1 to 125 primary particles (2) having an average particle diameter (d50) of 3 μm to 4 μm (or a radius of 1.5 μm to 2.0 μm). Under this condition, the anode material allows easy control of the number of primary particles, and can prevent fracture of the second hollow core due to expansion of the primary particles (or the nano-silicon particles) while securing high capacity and high output of the anode material.

**(S40) First coating layer formation step**

In one embodiment, the method may further include: forming a second coating layer on an outer circumferential surface of the first intermediate material (S40) after preparation of the first intermediate material (S30).

In one embodiment, the first coating layer may include at least one of a hard coating layer, a medium coating layer and a soft coating layer.

The first coating layer may have a different hardness than the second hollow core. When the first coating layer is composed of at least one layer, the first coating layer adjoining the second hollow core may have a different hardness than

the first coating layer. Under this condition, the first coating layer can prevent reduction in capacity and breakage or fracture of the anode material due to expansion of the primary particles (or the nano-silicon particles) while securing good electrical conductivity and long lifespan.

In one embodiment, the hard coating layer may be formed by mixing the first intermediate material with a hard coating material, followed by sintering the mixture. With the hard coating layer, the anode material can have good strength and durability to prevent fracture of the anode material upon expansion of the primary particles (or the nano-silicon particles), can exhibit good electrical conductivity and long lifespan, and can prevent reduction in capacity.

The hard coating material may be the same as described above.

In one embodiment, the hard coating layer may be formed by mixing 100 parts by weight of the first intermediate material with 0.1 to 30 parts by weight of the hard coating material, followed by sintering the mixture. Within this range, the anode material can have good strength and durability to prevent fracture of the anode material upon expansion of the nano-silicon particles, can exhibit good electrical conductivity and long lifespan, and can prevent reduction in capacity.

In one embodiment, sintering may be performed at 900°C to 1,050°C after mixing the first intermediate material with the hard coating material. Under this condition, the hard coating layer can be easily formed on the outer circumferential surface of the first intermediate material (or the second hollow core). For example, sintering may be performed at 965°C to 1,000°C. Sintering may be performed in an inert gas atmosphere. The inert gas may include nitrogen.

In one embodiment, the hard coating material may have a pencil hardness of 4H or higher, as measured in accordance with ISO 15184. Under this condition, the hard coating layer has good durability and strength and can prevent damage to or fracture of the second hollow core (or the anode material) upon expansion of the nano-silicon particles due to intercalation of lithium ions thereinto. For example, the hard coating material may have a pencil hardness of 4H to 6H.

In one embodiment, the hard coating material may have an average particle diameter (d50) of 3 nm to 2.5 $\mu$m. Under this condition, the hard coating layer can be easily formed. For example, the hard coating material may have an average particle diameter (d50) of 5 nm to 1,000 nm, 10 nm to 500 nm, or 15 nm to 200 nm.

In one embodiment, the hard coating layer may have a thickness of 5 nm to 100 nm. Under this condition, the hard coating layer can have good hardness and mechanical strength to prevent damage to or fracture of the anode material even upon expansion of the nano-silicon particles.

In one embodiment, the hard coating layer may be present in an amount of 1 wt% to 20 wt% based on the total weight of the anode material. Within this range, the anode material can exhibit good properties in terms of durability, structural stability, and electrical properties. For example, the hard coating layer may be present in an amount of 1 wt% to 15 wt%, 1 wt% to 10 wt%, 1 wt% to 7 wt%, 1 wt% to 6 wt%, 1 wt% to 5 wt%, or 2 wt% to 5 wt%. For example, the hard coating layer may be present in an amount of 1, 2, 3, 4, 5, 6, 7, 8, 9, 10, 11, 12, 13, 14, 15, 16, 17, 18, 19 or 20 wt%.

In one embodiment, the medium coating layer may be formed through heat treatment of the first intermediate material in a hydrocarbon gas atmosphere. Under this condition, the medium coating layer can very effectively relieve expansion of the anode material due to expansion of the nano-silicon particles and can prevent fracture of the hard hollow core to secure long lifespan of the anode material.

In one embodiment, the medium coating layer may be formed by heat treatment of at least one of hydrocarbon gas and carbon black. For example, the hydrocarbon gas may include at least one of methane ($CH_4$), ethane ($C_2H_6$), propane ($C_3H_8$), butane ($C_4H_{10}$), and pentane ($C_5H_{12}$).

For example, heat treatment may be performed at 850°C to 970°C. Under this condition, the medium coating layer can be easily formed. For example, heat treatment may be performed at 890°C to 910°C.

In one embodiment, heat treatment may be performed in a vacuum. Under this condition, the hydrocarbon gas can be evenly diffused, thereby forming an even medium coating layer through heat treatment. For example, heat treatment may be performed in a vacuum of $10^{-1}$ to $10^{-6}$ torr.

In one embodiment, the medium coating layer may have a pencil hardness of 2H to less than 4H, as measured in accordance with ISO 15184. Under this condition, the medium coating layer can very effectively relieve expansion of the anode material due to expansion of the nano-silicon particles and can prevent fracture of the hard hollow core to securing long lifespan of the anode material.

In one embodiment, the medium coating layer may have a thickness of 5 nm to 120 nm. Under this condition, the medium coating layer can prevent damage to or fracture of the anode material even upon expansion of the nano-silicon particles.

In one embodiment, the medium coating layer may be present in an amount of 1 wt% to 20 wt% based on the total weight of the anode material. Within this range, the medium coating layer has good electrical conductivity, can prevent cracking and fracture of the anode material upon expansion of the nano-silicon particles, and can minimize reduction in capacity to secure long lifespan of the anode material. For example, the medium coating layer may be present in an amount of 1 wt% to 15 wt%, 2 wt% to 10 wt%, 1 wt% to 5 wt%, or 3 wt% to 5 wt%. For example, the medium coating layer may be present in an amount of 1, 2, 3, 4, 5, 6, 7, 8, 9, 10, 11, 12, 13, 14, 15, 16, 17, 18, 19 or 20 wt%.

In one embodiment, the soft coating layer may be formed by mixing the first intermediate material with a soft coating material, followed by sintering the mixture. Under this condition, the soft coating layer can very effectively relieve

expansion of the anode material due to expansion of the nano-silicon particles, and can prevent damage to or fracture of the hard hollow core to secure long lifespan of the anode material.

In one embodiment, sintering may be performed at 850°C to 975°C. Under this condition, the soft coating layer can be easily formed on the outer circumferential surface of the first intermediate material. For example, sintering may be performed at 860°C to 975°C or at 900°C to 960°C.

In one embodiment, the soft coating material may include at least one of pitch, coke and carbon precursors formed of other organic materials. For example, the pitch may include at least one of pyrolysis fuel oil pitch and coal tar pitch.

In one embodiment, the soft coating layer may be formed by depositing a soft coating solution containing the soft coating material and a solvent, followed by sintering.

In one embodiment, the solvent may include at least one of water, an alcohol-based solvent, an amide-based solvent, an ester-based solvent, and a hydrocarbon-based solvent. The solvent serves to secure good miscibility and workability. The alcohol-based solvent may include at least one of methanol, ethanol, isopropanol, and butanol. The amide-based solvent may include at least one of N-methyl-2-pyrrolidone (NMP), dimethyl acetamide (DMAC), and dimethyl formamide (DMF). The hydrocarbon-based solvent may include toluene and/or xylene.

In one embodiment, the soft coating layer may have a pencil hardness of B to 3H, as measured in accordance with ISO 15184. Under this condition, the soft coating layer can very effectively relieve expansion of the anode material due to expansion of the nano-silicon particles and can prevent fracture of the hard hollow core to secure long lifespan. For example, the soft coating layer may have a pencil hardness of B to 1H.

In one embodiment, the soft coating layer may have a density of 1.5 $g/cm^3$ or less. Under this condition, the anode material is lightweight and can exhibit good structural stability. For example, the soft coating layer may have a density of 0.3 $g/cm^3$ to 1.5 $g/cm^3$.

In one embodiment, the soft coating layer may have a specific surface area (BET) of 300 $m^2/g$ or more. Under this condition, the anode material can exhibit good structural stability. For example, the anode material may have a specific surface area (BET) of 300 $m^2/g$ to 2,500 $m^2/g$.

In one embodiment, the soft coating layer may have a purity (impurity content) of 1000 ppm or more. Under this condition, the anode material can exhibit good electrical conductivity. For example, the soft coating layer may have a purity (impurity content) of 1,000 ppm to 5,000 ppm.

In one embodiment, the soft coating layer may have a resistivity of 50 $\mu\Omega\cdot m$ or more. Under this condition, the anode material can exhibit good electrical conductivity. For example, the soft coating layer may have a resistivity of 50 $\mu\Omega\cdot m$ to 300 $\mu\Omega\cdot m$.

In one embodiment, the soft coating layer may have a thickness of 5 nm to 100 nm. Under this condition, the soft coating layer can very effectively relieve expansion of the anode material due to expansion of the nano-silicon particles and can prevent damage to or fracture of the anode material.

In one embodiment, the soft coating layer may be present in an amount of 1 wt% to 20 wt% based on the total weight of the anode material. Within this range, the soft coating layer can exhibit good electrical conductivity, can effectively relieve expansion of the anode material due to expansion of the nano-silicon particles, can prevent damage to or fracture of the anode material, and can minimize reduction in capacity to secure long lifespan. For example, the soft coating layer may be present in an amount of 1 wt% to 15 wt%, 1 wt% to 10 wt%, 1 wt% to 7 wt%, 1 wt% to 6 wt%, 1 wt% to 5 wt%, or 2 wt% to 5 wt%. For example, the soft coating layer may be present in an amount of 1, 2, 3, 4, 5, 6, 7, 8, 9, 10, 11, 12, 13, 14, 15, 16, 17, 18, 19 or 20 wt%.

For example, the first coating layer may be formed by forming a hard (or medium) coating layer on the outer circumferential surface of the first intermediate material, and forming a medium (or hard) coating layer on the outer circumferential surface of the hard (or medium) coating layer.

In one embodiment, the first coating layer may include the hard coating layer and the medium coating layer in a weight ratio of 1:0.5 to 1:3. Within this range, the first coating layer has good electrical conductivity, can prevent cracking or fracture of the anode material upon expansion of the nano-silicon particles, and can minimize reduction in capacity to secure long lifespan. For example, the first coating layer may include the hard coating layer and the medium coating layer in a weight ratio of 1:1 to 1:3 or 1:1.5 to 1:2.5.

In one embodiment, the first coating layer may include the hard (or medium) coating layer and the medium (or hard) coating layer sequentially formed.

In another example, the first coating layer may be formed by forming a soft (or medium) coating layer on the outer circumferential surface of the first intermediate material, and forming a medium (or soft) coating layer on the outer circumferential surface of the hard (or medium) coating layer.

In another embodiment, the first coating layer may include the soft coating layer and the medium coating layer in a weight ratio of 1:0.5 to 1:3. Within this range, the first coating layer has good electrical conductivity, can prevent cracking or fracture of the anode material upon expansion of the nano-silicon particles, and can minimize reduction in capacity to secure long lifespan. For example, the first coating layer may include the soft coating layer and the medium coating layer in

a weight ratio of 1:1 to 1:3 or 1:1.5 to 1:2.5.

In another embodiment, the first coating layer may include the soft (or medium) coating layer and the medium (or soft) coating layer sequentially formed.

## Secondary battery including silicon carbon composite anode material

A further aspect of the present invention relates to a secondary battery including the silicon carbon composite anode material. In one embodiment, the secondary battery may include a cathode; an anode; and an electrolyte disposed between the cathode and the anode, wherein the anode includes the anode material.

The secondary battery may include a lithium secondary battery. In one embodiment, the lithium secondary battery may include a cathode including a cathode material; an anode spaced apart from the cathode and including the anode material; an electrolyte disposed between the anode and the cathode; and a separator disposed between the anode and the cathode to prevent electrical short of the anode and the cathode.

In one embodiment, each of the cathode and the anode may be manufactured by depositing a mixture comprising an active material, a conductive material and a binder on one surface of an electrode plate (electricity collector), followed by drying and pressing the mixture.

In one embodiment, each of a cathode plate and an anode plate may include at least one of copper, stainless steel, aluminum, nickel, and titanium.

In another example, the anode plate may be nickel foam, copper foam, a metal coated polyimide film, or a combination thereof.

In another example, the anode plate may include a copper foil, a carbon-coated copper foil, a copper foil having a surface roughness of 5 nm or more, a nickel foil, a stainless steel foil, a nickel-coated iron (Fe) foil, and a copper foil formed with holes having a size of 1 $\mu$m to 50 $\mu$m.

In one embodiment, the cathode material may include a composite oxide of a metal and lithium. The metal may include at least one of cobalt (Co), manganese (Mn), aluminum (Al), and nickel (Ni). For example, the metal may include at least one of lithium-nickel oxide, lithium-nickel-cobalt oxide, lithium-nickel-cobalt-manganese oxide, and lithium-nickel-cobalt-aluminum oxide.

In one embodiment, the conductive material may include at least one of natural graphite, artificial graphite, carbon black, acetylene black, Ketjen black, channel black, carbon fiber, metal fiber, carbon fluoride, aluminum, nickel powder, zinc oxide, potassium titanate, titanium oxide, and polyphenylene compounds.

In one embodiment, the binder may include polyvinylidene fluoride, polyvinyl alcohol, carboxymethylcellulose (CMC), starch, hydroxypropylcellulose, polyvinyl pyrrolidone, polytetrafluoroethylene, polyethylene, polypropylene, ethylene-propylene-diene monomer (EPDM), styrene rubber, and fluorine rubber.

In one embodiment, the separator may be a typical separator. For example, the separator may include at least one of polyester, polyethylene, polypropylene, and polytetrafluoroethylene (PTFE). The separator may be realized in the form of non-woven fabrics or woven fabrics. The separator is a porous structure having an average pore diameter of 0.01 $\mu$m to 10 $\mu$m and a thickness of 5 $\mu$m to 500 $\mu$m.

In one embodiment, the electrolyte may include a non-aqueous organic solvent and a lithium salt. For example, the non-aqueous organic solvent may include at least one of a carbonate solvent, an ester solvent, an ether solvent, and a ketone solvent. The carbonate solvent may include at least one of vinylene carbonate (VC), dimethyl carbonate (DMC), diethyl carbonate (DEC), dipropyl carbonate (DPC), fluoroethylene carbonate (FEC), methyl propyl carbonate (MPC), ethyl methyl carbonate (EMC), ethyl propyl carbonate (EPC), ethylene carbonate (EC), propylene carbonate (PC), and butylene carbonate (BC).

The ester solvent may include at least one of butyrolactone, decanolide, valerolactone, caprolactone, n-methyl acetate, n-ethyl acetate, and n-propyl acetate. The ether solvent may include dibutyl ether and the like. The ketone solvent may include poly(methyl vinyl ketone).

The lithium salt may act as a source of lithium ions in a battery. For example, the lithium salt may include at least one of $LiPF_6$, $LiBF_4$, $LiSbF_6$, $LiAsF_6$, $LiClO_4$, $LiCF_3SO_3$, $LiN(CF_3SO_2)_2$, $LiN(C_2F_5SO_2)_2$, $LiAlO_4$, and $LiAlCl_4$, without being limited thereto.

In one embodiment, the electrolyte may include at least one of vinylene carbonate, vinyl ethylene carbonate, monofluoroethylene carbonate, difluoroethylene carbonate, succinic anhydride, and 1,3-propane sultone.

In one embodiment, the lithium secondary battery may include a prismatic battery, a cylindrical battery, and a pouch-type battery.

Next, the present invention will be described in more detail with reference to examples. However, it should be understood that these examples are provided for illustration only and should not be construed in any way as limiting the invention.

## Examples and Comparative Example

### Example 1

(1) Preparation of nano-silicon slurry and dried powder: A dispersion comprising 100 parts by weight of silicon powder, 0.1 parts by weight of a dispersant (stearic acid) and 900 parts by weight of a first solvent (ethanol) was prepared and ground by milling to prepare a nano-silicon slurry (viscosity: 4,320 cP at 25°C) comprising nano-silicon particles having an average particle diameter (d50) of 200 nm (a radius of 100 nm). Then, dried powder was prepared by drying the nano-silicon slurry using a rotational spray dryer at a disc RPM of 20,000 rpm to 30,000 rpm.
(2) Preparation of first mixture: A first mixture comprising the dried powder and a hard coating material (carbon material having a pencil hardness of 4H to 6H in accordance with ISO 15184 and an average particle diameter (d50) of 0.05 μm to 0.5 μm, NanoMollisAdamas, Lemon Energy Co., Ltd.) as a first coating material was prepared.
(3) Preparation of first intermediate material and anode material: The first mixture was subjected to primary sintering at 850°C to 950°C. Thereafter, the first mixture subjected to primary sintering was subjected to pressing (uniaxial pressing) at a pressure of 10 atm to 30 atm, thereby preparing a pressed product. Next, a second mixture was prepared by mixing the pressed product with a soft coating material (comprising pitch having an average particle diameter (d50) of 0.03 μm to 5 μm) as a second coating material, and was subjected to secondary sintering at 960°C to 1,050°C to prepare a first intermediate material. Then, an anode material was prepared by crushing and classifying the first intermediate material.

The anode material included primary particles including a first hollow core (thickness: 20 nm, pencil hardness: 4H to 6H in accordance with ISO 15184, density: 1.8 g/cm$^3$ to 2.1 g/cm$^3$) having a first hollow portion therein and nano-silicon particles packed in the first hollow portion; and a secondary particle including a second hollow core (thickness: 20 nm, pencil hardness: B in accordance with ISO 15184, density: 1.3 g/cm$^3$) having a second hollow portion therein and at least one primary particle packed in the second hollow portion.

The nano-silicon particles included first nano-silicon particles having an average particle diameter (d50) of 200 nm (a radius of 100 nm) and second nano-silicon particles having an average particle diameter (d50) of 300 nm (a radius of 150 nm).

The primary particles included primary particles (1) having a first hollow portion having a radius of 1 μm (1,000 nm, average particle diameter: 2 μm) and primary particles (2) having a first hollow portion having a radius of 1.5 μm (1,500 nm). In addition, the primary particles (1) had a radius ($a_1$) of 1,020 nm, the primary particles (2) had a radius ($a_2$) of 1,520 nm, and the secondary particle included the second hollow portion having a radius (b) of 3 μm (average particle diameter: 6 μm).

The anode material included 25 wt% to 80 wt% of the nano-silicon particles, 1 wt% to 40 wt% of the first hollow core, and 1 wt% to 40 wt% of second hollow core, and included the second hollow core and the first hollow core in a weight ratio of 1:1 to 1:3.

### Example 2

An anode material was prepared by crushing and classifying a first intermediate material, which was prepared by subjecting the first mixture of Example 1 to primary sintering at 850°C to 945°C, followed by subjecting a second mixture including the first mixture and a soft coating material (comprising pitch having an average particle diameter (d50) of 0.03 μm to 5 μm) as a second coating material to secondary sintering at 955°C to 980°C.

The anode material included primary particles including a first hollow core (thickness: 20 nm, pencil hardness: 4H to 6H in accordance with ISO 15184, density: 1.8 g/cm$^3$ to 2.1 g/cm$^3$) having a first hollow portion therein and nano-silicon particles packed in the first hollow portion; and a secondary particle including a second hollow core (thickness: 10 nm to 30 nm, pencil hardness: B in accordance with ISO 15184, density: 1.3 g/cm$^3$) having a second hollow portion therein and at least one primary particle packed in the second hollow portion.

The nano-silicon particles included first nano-silicon particles having an average particle diameter (d50) of 200 nm (a radius of 100 nm) and second nano-silicon particles having an average particle diameter (d50) of 300 nm (a radius of 150 nm).

The primary particles included primary particles (1) having a first hollow portion having a radius of 1 μm (1,000 nm, average particle diameter: 2 μm) and primary particles (2) having a first hollow portion having a radius of 1.5 μm (1,500 nm). In addition, the primary particles (1) had a radius ($a_1$) of 1,020 nm, the primary particles (2) had a radius ($a_2$) of 1,520 nm, and the secondary particle included the second hollow portion having a radius (b) of 5 μm (average particle diameter: 10 μm).

The anode material included 25 wt% to 80 wt% of the nano-silicon particles, 1 wt% to 40 wt% of the first hollow core, and 1 wt% to 40 wt% of the second hollow core, and include the second hollow core and the first hollow core in a weight ratio of 1:1 to 1:3.

### Example 3

An anode material was prepared by mixing the first intermediate material of Example 1 with a hard coating material (carbon material having an average particle diameter (d50) of 0.01 μm to 0.5 μm and a pencil hardness of 4H to 6H in accordance with ISO 15184, NanoMollisAdamas, Lemon Energy Co., Ltd.), followed by sintering at 900°C to 1,050°C in an inert gas atmosphere to form a first coating layer (hard coating layer) on an outer circumferential surface of the first intermediate material (or the second hollow core).

The anode material included primary particles including a first hollow core (thickness: 20 nm, pencil hardness: 4H to 6H in accordance with ISO 15184, density: 1.8 to 2.1 g/cm$^3$) having a first hollow portion therein and nano-silicon particles packed in the first hollow portion; and a secondary particle including a second hollow core (thickness: 10 nm to 20 nm, pencil hardness: B in accordance with ISO 15184, density: 1.3 g/cm$^3$) having a second hollow portion therein, at least one primary particle packed in the second hollow portion and a first coating layer including a hard coating layer (thickness: 10 nm to 25 nm, pencil hardness: 4H to 6H in accordance with ISO 15184, density: 1.8 to 2.1 g/cm$^3$) formed on an outer circumferential surface of the second hollow core.

The nano-silicon particles included first nano-silicon particles having an average particle diameter (d50) of 200 nm (a radius of 100 nm) and second nano-silicon particles having an average particle diameter (d50) of 300 nm (a radius of 150 nm).

The primary particles included primary particles (1) having a first hollow portion having a radius of 1 μm (1,000 nm, average particle diameter: 2 μm) and primary particles (2) having a first hollow portion having a radius of 1.5 μm (1,500 nm). In addition, the primary particles (1) had a radius ($a_1$) of 1,020 nm, the primary particles (2) had a radius ($a_2$) of 1,520 nm, and the secondary particle included the second hollow portion having a radius (b) of 9 μm (average particle diameter: 18 μm).

The anode material included 25 wt% to 80 wt% of the nano-silicon particles, 1 wt% to 40 wt% of the first hollow core, 1 wt% to 40 wt% of the second hollow core, 1 wt% to 20 wt% of the first coating layer (hard coating layer), and included the second hollow core and the first hollow core in a weight ratio of 1:1 to 1:2.5.

### Example 4

A hard coating layer was formed on an outer circumferential surface of a first intermediate material (or a second hollow core) by mixing the first intermediate material of Example 1 with a hard coating material (carbon material having an average particle diameter (d50) of 0.01 μm to 0.5 μm and a pencil hardness of 4H to 6H in accordance with ISO 15184, NanoMollisAdamas, Lemon Energy Co., Ltd.), followed by sintering at 900°C to 1,050°C. Then, an anode material was prepared by placing the first intermediate material having the hard coating layer thereon in the chamber, followed by heat treatment at 900°C while supplying a hydrocarbon gas ($CH_4$) at a flow rate of 0.2 L/cc to the chamber in a vacuum of $10^{-2}$ torr to $10^{-6}$ torr for 20 min to form a medium coating layer on an outer circumferential surface of the hard coating layer through pyrolysis of the hydrocarbon gas.

The anode material included primary particles including a first hollow core (thickness: 20 nm, pencil hardness: 4H to 6H in accordance with ISO 15184, density: 1.8 g/cm$^3$ to 2.1 g/cm$^3$) having a first hollow portion therein and nano-silicon particles packed in the first hollow portion; and a secondary particle including a second hollow core (thickness: 10 nm to 20 nm, pencil hardness: B in accordance with ISO 15184, density: 1.3 g/cm$^3$) having a second hollow portion therein, at least one primary particle packed in the second hollow portion and a first coating layer (in which a hard coating layer having a thickness of 10 nm to 25 nm, a pencil hardness of 4H to 6H in accordance with ISO 15184 and a density of 1.8 g/cm$^3$ to 2.1 g/cm$^3$, and a medium coating layer having a thickness of 5 nm to 20 nm, a pencil hardness of 2H to 3H in accordance with ISO 15184 and a density of 1.5 g/cm$^3$ to 1.7 g/cm$^3$ were sequentially formed) on an outer circumferential surface of the second hollow core.

The nano-silicon particles included first nano-silicon particles having an average particle diameter (d50) of 200 nm (a radius of 100 nm) and second nano-silicon particles having an average particle diameter (d50) of 300 nm (a radius of 150 nm).

The primary particles included primary particles (1) having a first hollow portion having a radius of 1 μm (1,000 nm, average particle diameter: 2 μm) and primary particles (2) having a first hollow portion having a radius of 1.5 μm (1,500 nm). In addition, the primary particles (1) had a radius ($a_1$) of 1,020 nm, the primary particles (2) had a radius ($a_2$) of 1,520 nm, and the secondary particle included the second hollow portion having a radius (b) of 3 μm (average particle diameter: 6 μm).

The anode material included 25 wt% to 80 wt% of the nano-silicon particles, 1 wt% to 40 wt% of the first hollow

core, 1 wt% to 40 wt% of the second hollow core, and the first coating layer (1 wt% to 10 wt% of the hard coating layer and 1 wt% to 10 wt% of medium coating layer), and included the second hollow core and the first hollow core in a weight ratio of 1:1 to 1:2.5.

**Example 5**

(1) Preparation of first mixture: A first mixture comprising the dried powder of Example 1 and a soft coating material (comprising pitch having an average particle diameter (d50) of 0.01 μm to 0.5 μm) as a first coating material was prepared.

(2) Preparation of first intermediate material and anode material: The first mixture was subjected to primary sintering at 850°C to 950°C. Thereafter, the first mixture subjected to primary sintering was subjected to pressing (uniaxial pressing) at a pressure of 10 atm to 30 atm, thereby preparing a pressed product. Next, a second mixture was prepared by mixing the pressed product with a hard coating material (carbon material having an average particle diameter (d50) of 0.05 μm to 0.5 μm and a pencil hardness of 4H to 6H in accordance with ISO 15184, NanoMollisAdamas, Lemon Energy Co., Ltd.) as a second coating material, and was subjected to secondary sintering at 960°C to 1,050°C to prepare a first intermediate material. Then, an anode material was prepared by crushing and classifying the first intermediate material.

The anode material included primary particles including a first hollow core (thickness: 20 nm, pencil hardness: B to 1H in accordance with ISO 15184, density: 1.3 g/cm$^3$) having a first hollow portion therein and nano-silicon particles packed in the first hollow portion; and a secondary particle including a second hollow core (thickness: 20 nm, pencil hardness: 4H to 6H in accordance with ISO 15184, density: 1.8 g/cm$^3$ to 2.1 g/cm$^3$) having a second hollow portion therein and at least one primary particle packed in the second hollow portion.

The nano-silicon particles included first nano-silicon particles having an average particle diameter (d50) of 200 nm (a radius of 100 nm) and second nano-silicon particles having an average particle diameter (d50) of 300 nm (a radius of 150 nm).

The primary particles included primary particles (1) having a first hollow portion having a radius of 1 μm (1,000 nm, average particle diameter: 2 μm) and primary particles (2) having a first hollow portion having a radius of 1.5 μm (1,500 nm). In addition, the primary particles (1) had a radius ($a_1$) of 1,020 nm, the primary particles (2) had a radius ($a_2$) of 1,520 nm, and the secondary particle included the second hollow portion having a radius (b) of 3 μm (average particle diameter: 6 μm).

The anode material included 25 wt% to 80 wt% of the nano-silicon particles, 1 wt% to 40 wt% of the first hollow core, and 1 wt% to 40 wt% of the second hollow core, and include the second hollow core and the first hollow core in a weight ratio of 1:1 to 1:3.

**Example 6**

An anode material was prepared by crushing and classifying a first intermediate material, which was prepared by subjecting the first mixture of Example 5 to primary sintering at 850°C to 945°C, followed by subjecting a second mixture including the first mixture and a hard coating material (carbon material having an average particle diameter (d50) of 0.05 μm to 0.5 μm and a pencil hardness of 4H to 6H in accordance with ISO 15184, NanoMollisAdamas, Lemon Energy Co., Ltd.) to secondary sintering at 955°C to 1,050°C.

The anode material included primary particles including a first hollow core (thickness: 20 nm, pencil hardness: B to 1H in accordance with ISO 15184, density: 1.3 g/cm$^3$) having a first hollow portion therein and nano-silicon particles packed in the first hollow portion; and a secondary particle including a second hollow core (thickness: 20 nm, pencil hardness: 4H to 6H in accordance with ISO 15184, density: 1.8 g/cm$^3$ to 2.1 g/cm$^3$) having a second hollow portion therein and at least one primary particle packed in the second hollow portion.

The nano-silicon particles included first nano-silicon particles having an average particle diameter (d50) of 200 nm (a radius of 100 nm) and second nano-silicon particles having an average particle diameter (d50) of 300 nm (a radius of 150 nm).

The primary particles included primary particles (1) having a first hollow portion having a radius of 1 μm (1,000 nm, average particle diameter: 2 μm) and primary particles (2) having a first hollow portion having a radius of 1.5 μm (1,500 nm). In addition, the primary particles (1) had a radius ($a_1$) of 1,020 nm, the primary particles (2) had a radius ($a_2$) of 1,520 nm, and the secondary particle included the second hollow portion having a radius (b) of 5 μm (average particle diameter: 10 μm).

The anode material included 25 wt% to 80 wt% of the nano-silicon particles, 1 wt% to 40 wt% of the first hollow

core, and 1 wt% to 40 wt% of the second hollow core, and included the second hollow core and the first hollow core in a weight ratio of 1:1 to 1:3.

**Example 7**

An anode material was prepared by mixing the first intermediate material of Example 5 with a soft coating material (comprising pitch having an average particle diameter (d50) of 0.01 μm to 0.5 μm), followed by sintering at 850°C to 975°C in an inert gas atmosphere to form a first coating layer (soft coating layer) on an outer circumferential surface of the first intermediate material (or the second hollow core).

The anode material included primary particles including a first hollow core (thickness: 20 nm, pencil hardness: B to 1H in accordance with ISO 15184, density: 1.3 g/cm$^3$) having a first hollow portion therein and nano-silicon particles packed in the first hollow portion; and a secondary particle including a second hollow core (thickness: 20 nm, pencil hardness: 4H to 6H in accordance with ISO 15184, density: 1.8 g/cm$^3$ to 2.1 g/cm$^3$) having a second hollow portion therein, at least one primary particle packed in the second hollow portion and a first coating layer including soft coating layer (thickness: 10 nm to 25 nm, pencil hardness: B to 1H in accordance with ISO 15184, density: 0.3 g/cm$^3$ to 1.5 g/cm$^3$) formed on an outer circumferential surface of the second hollow core.

The nano-silicon particles included first nano-silicon particles having an average particle diameter (d50) of 200 nm (a radius of 100 nm) and second nano-silicon particles having an average particle diameter (d50) of 300 nm (a radius of 150 nm).

The primary particles included primary particles (1) having a first hollow portion having a radius of 1 μm (1,000 nm, average particle diameter: 2 μm) and primary particles (2) having a first hollow portion having a radius of 1.5 μm (1,500 nm). In addition, the primary particles (1) had a radius ($a_1$) of 1,020 nm, the primary particles (2) had a radius ($a_2$) of 1,520 nm, and the secondary particle included the second hollow portion having a radius (b) of 9 μm (average particle diameter: 18 μm).

The anode material included 25 wt% to 80 wt% of the nano-silicon particles, 1 wt% to 40 wt% of the first hollow core, and 1 wt% to 40 wt% of the second hollow core and, 1 wt% to 20 wt% of the first coating layer (including soft coating layer), and included the second hollow core and the first hollow core in a weight ratio of 1:1 to 1:2.5.

**Example 8**

A soft coating layer was formed on the outer circumferential surface of the first intermediate material (or the second hollow core) by mixing the first intermediate material of Example 5 with a soft coating material (comprising pitch having an average particle diameter (d50) of 0.01 μm to 0.5 μm), followed by sintering at 850°C to 975°C in an inert gas atmosphere.

Then, an anode material was prepared by placing the first intermediate material having the soft coating layer thereon in the chamber, followed by heat treatment at 900°C while supplying a hydrocarbon gas ($CH_4$) at a flow rate of 0.2 L/cc to the chamber in a vacuum of $10^{-2}$ torr to $10^{-6}$ torr for 20 min to form a medium coating layer on an outer circumferential surface of the soft coating layer through pyrolysis of the hydrocarbon gas.

The anode material included primary particles including a first hollow core (thickness: 20 nm, pencil hardness: B to 1H in accordance with ISO 15184, density: 1.3 g/cm$^3$) having a first hollow portion therein and nano-silicon particles packed in the first hollow portion; and a secondary particle including a second hollow core (thickness: 20 nm, pencil hardness: 4H to 6H in accordance with ISO 15184, density: 1.8 to 2.1 g/cm$^3$) having a second hollow portion therein, at least one primary particle packed in the second hollow portion and a first coating layer (in which a soft coating layer having a thickness of 10 nm to 25 nm, a pencil hardness of B to 1H in accordance with ISO 15184, and a density of 0.3 to 1.5 g/cm$^3$ and a medium coating layer having a thickness of 5 nm to 20 nm, a pencil hardness of 2H to 3H in accordance with ISO 15184, and a density of 1.5 to 1.7 g/cm$^3$ were sequentially formed) on an outer circumferential surface of the second hollow core.

The nano-silicon particles included first nano-silicon particles having an average particle diameter (d50) of 200 nm (a radius of 100 nm) and second nano-silicon particles having an average particle diameter (d50) of 300 nm (a radius of 150 nm).

The primary particles included primary particles (1) having a first hollow portion having a radius of 1 μm (1,000 nm, average particle diameter: 2 μm) and primary particles (2) having a first hollow portion having a radius of 1.5 μm (1,500 nm). In addition, the primary particles (1) had a radius ($a_1$) of 1,020 nm, the primary particles (2) had a radius ($a_2$) of 1,520 nm, and the secondary particle included the second hollow portion having a radius (b) of 3 μm (average particle diameter: 6 μm).

The anode material included 25 wt% to 80 wt% of the nano-silicon particles, 1 wt% to 40 wt% of the first hollow core, and 1 wt% to 40 wt% of the second hollow core, and the first coating layer(1 wt% to 10 wt% of the soft coating layer and 1 wt% to 10 wt% of the medium coating layer), and include the second hollow core and the first hollow core in a weight ratio

of 1: 1 to 1:2.5.

**(1) Deduction of the numbers of first and second nano-silicon particles packed in primary particle**

In Examples 1 to 8, the numbers ($n_1$, $n_2$) of first and second nano-silicon particles packed in the first hollow portion of the primary particle satisfied Formula 1.

[Formula 1]

$$n_1 \left(\frac{r_1'}{R}\right)^3 + n_2 \left(\frac{r_2'}{R}\right)^3 \leq 1$$

,

where $r_1$' denotes the radius of the first expanded nano-silicon particles, rz' denotes the radius of the second expanded nano-silicon particles, and R is the radius of the first hollow portion, $r_1$' and $r_2$' being 1.5874*$r_1$ and 1.5874*$r_2$, respectively.

**Preparative Examples 1 to 3**

Table 1 shows the number ($n_1$) of first nano-silicon particles having a radius ($r_1$) of 100 nm (post-expansion radius ($r_1$') of 158 nm) and packed in the primary particle and the number (nz) of second nano-silicon particles having a radius ($r_2$) of 150 nm (post-expansion radius (rz') of 238 nm) and packed therein according to the conditions of Formula 1, in which the primary particle includes a first hollow portion having a radius (R) of 1 μm, 1.5 μm or 2 μm.

[Table 1]

| Item | R (nm) | $r_1$, $r_1$' (nm) | $r_2$, $r_2$' (nm) | $n_1$ | $n_2$ | $n_1$+$n_2$ |
|---|---|---|---|---|---|---|
| Preparative Example 1 | 1,000 | 100, 158 | 150, 238 | 126 | 37 | 163 |
| Preparative Example 2 | 1,500 | 100, 158 | 150, 238 | 427 | 125 | 552 |
| Preparative Example 3 | 2,000 | 100, 158 | 150, 238 | 1,014 | 296 | 1,310 |

Referring to Table 1, it could be seen that, when the primary particle including a first hollow portion having a radius r of 1 μm to 2 μm (a diameter of 2 μm to 4 μm) was packed with 126 to 1,014 first nano-silicon particles having a radius of 100 nm and 37 to 296 second nano-silicon particles having a radius of 150 nm (total number: 163 to 1,310), the primary particles (first hollow core) did not suffer from cracking or fracture even upon expansion of the nano-silicon particles to 4 times in volume.

As a result, it could be seen that, in Examples 1 to 8, when the primary particle (1) including the first hollow portion having a radius of 1 μm (1,000 nm) was packed with 126 first nano-silicon particles (radius: 100 nm) and 37 second nano-silicon particles (radius: 150 nm) (total number; 163), and the primary particle 2 including the first hollow portion having a radius of 1.5 μm (1,500 nm) was packed with 427 first nano-silicon particles (radius: 100 nm) and 125 second nano-silicon particles (radius: 150 nm) (total number: 552), the primary particles (first hollow core) did not suffer from cracking or fracture even upon expansion of the nano-silicon particles to 4 times in volume.

**(2) Deduction of the numbers of primary particles (1) and (2) packed in second hollow portion**

In Examples 1 to 8, the numbers of primary particles (1) and (2) packed in the second hollow portion of the secondary particle satisfied Formula 2.

[Formula 2]

$$n_3\left(\frac{a_1}{b}\right)^3 + n_4\left(\frac{a_2}{b}\right)^3 \leq 1$$

,

where $a_1$ and $n_3$ denote the radius and the number of primary particles (1), respectively; $a_2$ and $n_4$ denote the radius and the number of primary particles (2), respectively; and b denotes the radius of the second hollow portion.

Table 2 shows the number of primary particles (1) having a radius ($a_1$) of 1,020 nm and packed in the secondary particle and the number of primary particles (2) having radii ($a_2$) of 1,520 nm and packed therein according to the conditions of Formula 2. In Table 2, PNR denotes a packing number ratio corresponding to a packing density and was obtained according to the following formula:

$$PNR = n_1*(a_1/b)^3 + n_2*(a_2/b)^3,$$

where b is the radius of the second hollow portion.

[Table 2]

| Item | b (nm) | $a_1$, $a_2$ (nm) | $r_1$, $r_1$' (nm) | $r_2$, $r_2$' (nm) | $n_3$ | $n_4$ | $n_3$+$n_4$ | PNR |
|---|---|---|---|---|---|---|---|---|
| Example 1 | 3,000 | 1,020, 1,520 | 100, 158 | 150, 238 | 7 | 2 | 9 | 0.491 |
| Example 2 | 5,000 | 1,020, 1,520 | 100, 158 | 150, 238 | 34 | 10 | 43 | 0.525 |
| Example 3 | 9,000 | 1,020, 1,520 | 100, 158 | 150, 238 | 221 | 61 | 282 | 0.583 |
| Example 4 | 3,000 | 1,020, 1,520 | 100, 158 | 150, 238 | 7 | 2 | 9 | 0.491 |
| Example 5 | 3,000 | 1,020, 1,520 | 100, 158 | 150, 238 | 7 | 2 | 9 | 0.491 |
| Example 6 | 5,000 | 1,020, 1,520 | 100, 158 | 150, 238 | 34 | 10 | 43 | 0.525 |
| Example 7 | 9,000 | 1,020, 1,520 | 100, 158 | 150, 238 | 221 | 61 | 282 | 0.583 |
| Example 8 | 3,000 | 1,020, 1,520 | 100, 158 | 150, 238 | 7 | 2 | 9 | 0.491 |

Referring to Table 2, it could be seen that, in Examples 1 to 8, when the secondary particle including the second hollow portion having a radius of 3 μm to 9 μm was packed with 7 to 221 primary particles (1) having a radius ($a_1$) of 1,020 nm and 2 to 61 primary particles (2) having a radius ($a_2$) of 1,520 nm (total 9 to 282 primary particles), the secondary particle (second hollow core) did not suffer from cracking or fracture even upon expansion of the nano-silicon particles to 4 times in volume.

**Comparative Example 1**

Sintered powder was prepared by sintering the dried powder prepared in Example 1 at 900°C to 1,050°C in an inert gas atmosphere. Thereafter, an anode material (intermediate material) was prepared by mixing the sintered powder with a soft coating material (including pitch having an average particle diameter (d50) of 3 μm to 5 μm), followed by sintering the mixture at 850°C to 975°C to form a first coating layer (soft coating layer), and was crushed and classified.

The anode material included a core including nano-silicon particles and a first coating layer (soft coating layer having a thickness: 10 nm to 20 nm, a pencil hardness of B in accordance with ISO 15184, and a density of 1.5 g/cm$^3$) on an outer circumferential surface of the core.

The anode material included 25 wt% to 80 wt% of the nano-silicon particles and 20 wt% to 75 wt% of the first coating layer.

**Experimental Example**

(1) Measurement of grain size at (111) plane, oxidation rate, and specific surface area of nano-silicon particles: The anode materials prepared in Examples and Comparative Example were measured as to the grain size at the (111) plane, oxidation rate, and specific surface area of the nano-silicon particles. Specifically, the grain size of the nano-silicon particles prepared in Examples and Comparative Example was calculated according to a gain size equation (Scherrer Equation for K=9) based on the FWHM (full width at half maximum) values at the (111) plane in X-ray diffraction analysis using CuKα-rays. The oxidation rate of the nano-silicon particles was calculated based on the content of oxygen measured using a measurement instrument (OsNH 836 Series, LECO) and the specific surface area thereof was measured using a BET meter (Micromeritics, Tristar II 3920). Table 3 shows measurement results.

[Table 3]

| Item | Grain size (nm) at (111) | Oxygen content (wt%) | Specific surface area (m$^2$/g) |
|---|---|---|---|
| Example 1 | 15.9 | 6.5 | 4.2 |

(continued)

| Item | Grain size (nm) at (111) | Oxygen content (wt%) | Specific surface area ($m^2/g$) |
|---|---|---|---|
| Example 2 | 16.1 | 6.6 | 4.3 |
| Example 3 | 15.8 | 6.6 | 4.1 |
| Example 4 | 16.5 | 6.4 | 5.4 |
| Example 5 | 15.8 | 6.2 | 4.5 |
| Example 6 | 16.1 | 6.3 | 4.6 |
| Example 7 | 15.9 | 6.3 | 4.3 |
| Example 8 | 16.2 | 6.2 | 5.1 |
| Comparative Example 1 | 15.7 | 9.6 | 4.9 |

Referring to Table 3, it could be seen that the anode materials of Examples 1 to 8 had higher crystallinity and lower oxidation rates to provide better properties in terms of high output and long lifespan than the anode material of Comparative Example 1.

In addition, for the nano-silicon particles, it is desirable to have a smaller grain size in order to allow reversible physical expansion and contraction thereof upon intercalation and deintercalation of lithium ions (a smaller grain size of the silicon particles results in a greater half-width of the main peak in the Si [111] orientation in the 2θ data of XRD and a smaller grain size calculated according to the Scherrer equation for K=9). However, a smaller grain size of the silicon particles can cause increase in oxidation rate of silicon through increase in grinding time of a silicon material. Therefore, it is important to control the oxidation rate of the nano-silicon particles through determination of the size of the silicon particles and production of the silicon particles having a suitable grain size.

That is, according to the present invention, the average particle diameter (d50) of the nano-silicon particles is set to satisfy the oxidation rate of a silicon anode. In this case, expansion/contraction of the nano-silicon particles becomes reversible. Accordingly, it is possible to secure stable electrochemical characteristics in evaluation of lithium ion secondary batteries using the anode materials of Examples.

The nano-silicon particles may have an FWHM value of the X-ray diffraction angle (2θ) of 0.40° to 0.80°, preferably 0.52° to 0.68°, or 0.59° to 0.71°, at the (111) plane in X-ray diffraction analysis using CuKα-rays.

When the FWHM value of the nano-silicon particles satisfies the above range after sintering, fracture of the silicon particles can be significantly reduced upon charging/discharging by sufficiently suppressing new exposed surfaces of the nano-silicon particles. However, the anode materials of Examples allowed efficient charging/discharging, thereby significantly improving lifespan of the silicon anodes. Further, it can be seen that a high capacity silicon anode, that is, an anode material for lithium ion secondary batteries, can be produced using the nano-silicon particles such that capacity of a silicon/carbon composite exceeds the range of 1,300 mAh/g to 1,400 mAh/g.

(2) Anode material XRD peak analysis: Among the anode materials of Examples and Comparative Example, the hollow core and the soft coating layer of the anode material of Example 1 were analyzed based on XRD peaks. FIG. 3 shows an analysis result.

FIG. 3 is an XRD graph depicting an XRD analysis result of the first hollow core and the second hollow core of the anode material of Example 1. Referring to FIG. 3, in the XRD graph, the first hollow core of Example 1 had a primary peak at 2θ = 25~26° at the C(002) plane, whereas the second hollow core of Example 1 had a primary peak near at 2θ = 23° substantially indicating graphite. Accordingly, it could be seen that the first hollow core had better crystallinity than the second hollow core.

Referring again to FIG. 3, the secondary peak appeared near at 2θ = 43° at the C(100) plane and the first hollow core had higher crystallinity than the second hollow core. Accordingly, it could be seen that the first hollow core with high crystallinity had higher hardness, better stiffness, and higher electrical conductivity of carbon than the second hollow core.

(3) Electrochemical evaluation (1)

(3-1) Preparation of lithium ion battery (half-coin type cell): CR2032 half-coin cells were prepared using the anode materials of Examples and Comparative Example. Specifically, a mixture was prepared by mixing 96.99 wt% of the anode material of each of Examples and Comparative Example, 0.11 wt% of a conductive material (Oscial, Tuball, graphene carbon nanotube), 1.65 wt% of CMC (carboxy methyl cellulose), and 1.25 wt% of styrene butadiene rubber (SBR). Next, an anode slurry having a capacity of about 450 mAh/g was prepared by mixing 10.1 wt% of the prepared mixture with 89.9 wt% of commercially available natural graphite having a capacity of 364 mAh/g. Then, an anode was prepared by coating the prepared slurry onto one surface of an anode collector, followed by drying and pressing. The anode had a loading quantity

of 6.5±0.5 mg/cm$^2$ and an electrode density of 1.60 g/cc to 1.65 g/cc.

A CR2032 half-coin cell was prepared using a lithium cathode (thickness: 300 μm, MTI), an electrolyte, and a separator (including polypropylene and polyethylene) by a typical method. The electrolyte was prepared by dissolving 1M $LiPF_6$ in a solvent mixture of ethyl methyl carbonate (EMC) and ethylene carbonate (EC) (EMC:EC = 5:5 in volume ratio), followed by adding vinylene carbonate (VC) and fluoroethylene carbonate (FEC) to the solvent mixture (94.5 wt% of the solvent mixture, 0.5 wt% of vinylene carbonate and 5 wt% of fluoroethylene carbonate).

(3-2) Evaluation of charge/discharge characteristics: The half-coin cells prepared in (3-1) were subjected to aging at room temperature (25°C) for 20 hours, followed by electrochemical evaluation. For the anode materials, a reference capacity was set to 450 mAh/g and a measurement temperature was set to 45°C. A single cycle of a precharging process was performed in the operation voltage range of 0.005V to 1.5V, in which the charge/discharge current was 0.1C for one cycle. Then, after two cycles at a capacity of 0.2C, 50 cycles of lifespan evaluation were performed by applying a current of 0.5C upon charging/discharging at 0.2C in two cycles. Here, charge cut-off current was set to 0.005C and discharge cut-off voltage was set to 1.0V.

Lifespan (%) of the secondary batteries was evaluated through electrochemical evaluation of capacity (mAh/g) of the anodes of Examples and Comparative Example, and capacity (mAh/g), charge/discharge efficiency (%) and capacity retention rate of anode plates. Table 4 shows evaluation results.

(3-3) Evaluation of expansion characteristics: An expansion rate of the anode material upon charging/discharging was evaluated with respect to each of the half-coin cells of Examples and Comparative Example prepared in (3-1). Evaluation of the expansion rate was performed with reference to an initial anode thickness of the half-coin cell. The half-coin cell was charged with a current of 0.5C after 50 cycles of charging/discharging at a current of 0.5C. Next, the thickness of the anode and the thickness increase rate with reference to the initial anode thickness were measured. Table 4 shows a measurement result.

The thickness of the anode was measured using a measuring device (micrometer) after completion of the cycles, followed by dissembling the half-coin cell and completely removing foreign matter including a salt therefrom using a solvent (DMC).

[Table 4]

| Item | Capacity (mAh/g) | Capacity of anode plate (mAh/g) | Charge/discharge efficiency (%) | Lifespan (%) @50cycle | Expansion rate (%) @50cycle |
|---|---|---|---|---|---|
| Example 1 | 1615 | 635 | 90.2 | 91.1 | 41.3 |
| Example 2 | 1610 | 621 | 90.5 | 90.6 | 40.3 |
| Example 3 | 1620 | 615 | 89.6 | 89.5 | 42.3 |
| Example 4 | 1635 | 638 | 90.6 | 91.6 | 39.5 |
| Example 5 | 1605 | 629 | 90.1 | 90.1 | 41.3 |
| Example 6 | 1595 | 621 | 89.9 | 89.4 | 40.5 |
| Example 7 | 1610 | 625 | 89.6 | 89.5 | 41.2 |
| Example 8 | 1630 | 632 | 90.5 | 90.4 | 39.7 |
| Comparative Example 1 | 1575 | 610 | 85.7 | 64.8 | 59.5 |

Referring to Table 4, it could be seen that the anode materials of Examples 1 to 8 had better properties in terms of charge/discharge efficiency and long lifespan than Comparative Example 1. In addition, it could be seen that the anode materials of Examples 1 to 8 had lower volume change rates upon charging/discharging than Comparative Example 1, thereby preventing cracking and fracture upon intercalation/deintercalation of lithium ions and securing long lifespan through minimization in capacity reduction.

(3-4) Impedance evaluation: Impedance (charge transfer resistance (Rct)) of each of the half-cells of Examples and Comparative Example prepared in (3-1) was measured according to electrochemical impedance spectroscopy (EIS) by charging and discharging under conditions: 0.5C/0.01C cutoff charge, 1.5V discharge and 100% SOC (state of charge), and measurement results are shown in Table 5.

[Table 5]

| Item | Rct (mohm) (@SOC 100%) |
|---|---|
| Example 1 | 25.0 |
| Example 2 | 25.3 |
| Example 3 | 25.6 |
| Example 4 | 23.6 |
| Example 5 | 24.7 |
| Example 6 | 25.0 |
| Example 7 | 24.6 |
| Example 8 | 23.9 |
| Comparative Example 1 | 59.3 |

Referring to Table 5, it could be seen that the anode materials of Examples 1 to 8 had lower impedance values, particularly much lower charge transfer resistance (Rct), than the anode material of Comparative Example 1.

(4) Electrochemical evaluation (2)

(4-1) Preparation of lithium ion battery (1.0 Ah pouch type full cell): Pouch type full cells were prepared using the anode materials of Examples and Comparative Example. Specifically, a mixture was prepared by mixing 96.99 wt% of the anode material of each of Examples and Comparative Example, 0.11 wt% of a conductive material (Oscial, Tuball, graphene carbon nanotube), 1.65 wt% of CMC (carboxy methyl cellulose), and 1.25 wt% of styrene butadiene rubbers (SBR). Next, an anode slurry having a capacity of about 550 mAh/g was prepared by mixing 10.1 wt% of the prepared mixture with 89.9 wt% of commercially available natural graphite having a capacity of 364 mAh/g. Then, an anode was prepared by coating the prepared slurry onto one surface of an anode collector plate, followed by drying and pressing. The anode had a loading quantity of 6.5±0.5m g/cm$^2$ and an electrode density of 1.55 g/cc to 1.60 g/cc.

Next, pouch cells having a capacity of 1.0 Ah were prepared using a cathode (NCM622), an electrolyte, and a separator (including polypropylene and polyethylene) by a typical method.

The electrolyte was prepared by dissolving 1M $LiPF_6$ in a solvent mixture of ethyl methyl carbonate (EMC) and ethylene carbonate (EC) (EMC:EC = 5:5 in volume ratio), followed by adding vinylene carbonate (VC) and fluoroethylene carbonate (FEC) to the solvent mixture (96.5 wt% of the solvent mixture, 0.5 wt% of vinylene carbonate and 3 wt% of fluoroethylene carbonate).

(4-2) Evaluation of charge/discharge characteristics: The full cells prepared in (4-1) were subjected to aging at room temperature (25°C) for 20 hours, followed by electrochemical evaluation at room temperature. Specifically, for each of the full cells prepared in Examples and Comparative Example, a single cycle of a precharging process of 0.1C charge/0.1C discharge was performed in the operation voltage range of 2.75V to 4.25V. In one cycle, the charge current was set to 0.1C and the cut-off current was set to 0.005C. Then, after two cycles with reference to a standard process of 0.2C charge, 0.01C cut-off/0.1C discharge, 250 cycles of lifespan evaluation (capacity retention rate) were performed under conditions of 1.0C/4.2V cutoff by applying a charge current of 0.5C/0.02C cut-off upon charging with reference to 0.2C discharge capacity in two cycles. Table 6 shows evaluation results.

[Table 6]

| Item | One cycle charge/discharge efficiency (0.1C/0.1C) | Capacity retention rate @250cycle |
|---|---|---|
| Example 1 | 86.3 | 96.2 |
| Example 2 | 86.2 | 96.1 |
| Example 3 | 86.3 | 96.2 |
| Example 4 | 86.8 | 96.9 |
| Example 5 | 86.1 | 95.9 |
| Example 6 | 86.1 | 96.2 |
| Example 7 | 86.2 | 96.3 |

(continued)

| Item | One cycle charge/discharge efficiency (0.1C/0.1C) | Capacity retention rate @250cycle |
|---|---|---|
| Example 8 | 86.9 | 96.0 |
| Comparative Example 1 | 85.3 | 80.4 |

From the result of Table 6, it could be seen that the full cells of Examples 1 to 8 had better properties in terms of charge/discharge efficiency and long lifespan characteristics than that of Comparative Example 1.

(5) Evaluation of expansion characteristics of single-electrode plate: An expansion rate of the anode material upon charging/discharging was evaluated with respect to Examples and Comparative Example. Specifically, cathode plates were fabricated using NCM622 and anode plates were fabricated using the anode materials prepared in Examples 1 to 8 and Comparative Example 1 under conditions of current density of 3.2 $mA/cm^2$ and rolling density of 1.55 g/cc. Then, single-electrode plate cells with an anode and a cathode facing each other was fabricated using these plates.

Next, the single-electrode plate cell was subjected to a precharging process and a standard process by 0.1C/0.1C charge/discharge once and 0.25C/0.25C charge/discharge once. Thereafter, 50 cycles of charge/discharge were performed by repeating a cycle of charging at 0.6C and 2.65V cutoff and discharging at 0.6C and 4.2V cutoff.

Next, for the single-electrode plate cells of Examples 1 to 8 and Comparative Example 1, an initial thickness of the anode and thicknesses of the anode after 1 cycle, 30 cycles and 50 cycles were measured and thickness change rates in 1 cycle, 30 cycles and 50 cycles were measured with reference to the initial anode thickness. In addition, charge/discharge efficiency (%) of each of the single-electrode plate cells upon operation of 1 cycle was measured and Table 7 shows measurement results.

[Table 7]

| Item | 1 cycle charge/discharge efficiency (%) (0.1C/0.1C) | Thickness change rate in 1 cycle | Thickness change rate in 30 cycles | Thickness change rate in 50 cycles |
|---|---|---|---|---|
| Example 1 | 85.30% | 13.50% | 25.20% | 26.50% |
| Example 2 | 86.10% | 12.90% | 25.80% | 26.90% |
| Example 3 | 86.70% | 13.60% | 25.10% | 26.20% |
| Example 4 | 86.90% | 13.20% | 22.40% | 25.00% |
| Example 5 | 85.20% | 13.60% | 25.10% | 26.20% |
| Example 6 | 85.40% | 13.50% | 25.20% | 26.10% |
| Example 7 | 85.20% | 13.60% | 26.40% | 25.90% |
| Example 8 | 86.80% | 13.10% | 22.40% | 25.60% |
| Comparative Example 1 | 83.30% | 17.30% | 36.20% | 45.10% |

Referring to Table 7, it could be seen that Examples 1 to 8 had lower thickness (volume) change rates than Comparative Example 1 upon charge/discharge of the single-electrode plate cell.

Although the present invention has been described with reference to some example embodiments, it should be understood by those skilled in the art that these embodiments are given by way of illustration only, and that various modifications, variations and alterations can be made without departing from the spirit and scope of the invention. Therefore, the embodiments should not be construed as limiting the technical spirit of the present invention, but should be construed as illustrating the technical spirit of the present invention. The scope of the invention should be interpreted according to the following appended claims as covering all modifications or variations derived from the appended claims and equivalents thereto.

## Claims

**1.** An anode material comprising:

a primary particle comprising a first hollow core having a first hollow portion therein and nano-silicon particles

packed in the first hollow portion; and
a secondary particle comprising a second hollow core having a second hollow portion therein and at least one primary particle packed in the second hollow portion,
wherein the first hollow core has a different hardness than the second hollow core.

**2.** The anode material according to claim 1, wherein:

the number of nano-silicon particles packed in the first hollow portion is set such that a total volume of expanded nano-silicon particles formed by intercalation of lithium ions into the nano-silicon particles is equal to or less than a volume of the first hollow portion; and
the number of primary particles packed in the second hollow portion is set such that a total volume of the primary particles is equal to or less than a volume of the second hollow portion.

**3.** The anode material according to claim 2, wherein the primary particles comprise first nano-silicon particles and second nano-silicon particles having a radius $r_1$ and a radius rz, respectively, and the numbers ($n_1$, $n_2$) of first and second nano-silicon particles packed in the first hollow portion satisfy Formula 1.

[Formula 1]

$$n_1 \left(\frac{r_1'}{R}\right)^3 + n_2 \left(\frac{r_2'}{R}\right)^3 \leq 1$$

,

where $r_1$' denotes a radius of first expanded nano-silicon particles, $r_2$' denotes a radius of second expanded nano-silicon particles, and R is a radius of the first hollow portion, $r_1$' and $r_2$' being 1.5874*$r_1$ and 1.5874*$r_2$, respectively.

**4.** The anode material according to claim 3, wherein the secondary particle comprises primary particles (1) and (2) having radii $a_1$ and $a_2$, respectively, and the numbers of primary particles (1) and (2) packed in the second hollow portion may satisfy Formula 2.

[Formula 2]

$$n_3 \left(\frac{a_1}{b}\right)^3 + n_4 \left(\frac{a_2}{b}\right)^3 \leq 1$$

,

where $a_1$ and $n_3$ denote the radius and the number of primary particles (1), respectively; $a_2$ and $n_4$ denote the radius and the number of primary particles (2), respectively; and b denotes the radius of the second hollow portion.

**5.** The anode material according to claim 1, wherein the first hollow core has a pencil hardness of 4H or higher and the second hollow core has a pencil hardness of less than 4H, as measured in accordance with ISO 15184.

**6.** The anode material according to claim 1, wherein the first hollow core has a pencil hardness of less than 4H and the second hollow core has a pencil hardness of 4H or higher, as measured in accordance with ISO 15184.

**7.** The anode material according to claim 1, wherein the first hollow core has a thickness of 5 nm to 300 nm, the first hollow portion has an average diameter of 1 μm to 10 μm, the nano-silicon particles have an average particle diameter of 50 nm to 500 nm, and the number of nano-silicon particles packed in the first hollow portion ranges from 50 to 10,000.

**8.** The anode material according to claim 1, wherein the second hollow core has a thickness of 5 nm to 500 nm, the second hollow portion has an average diameter of 3 μm to 25 μm, and the number of primary particles packed in the second hollow portion ranges from 5 to 500.

**9.** The anode material according to claim 1, wherein the anode material comprises 25 wt% to 80 wt% of the nano-silicon particles, 1 wt% to 40 wt% of the first hollow core, and 1 wt% to 40 wt% of the second hollow core based on the total weight of the anode material.

**10.** The anode material according to claim 1, wherein the anode material comprises the second hollow core and the first hollow core in a weight ratio of 1:0.5 to 1:6.

**11.** The anode material according to claim 1, further comprising:

a first coating layer formed on an outer circumferential surface of the second hollow core,
wherein the first coating layer comprises at least one of a hard coating layer, a soft coating layer and a medium coating layer, and has a different hardness than the second hollow core.

**12.** A method of preparing an anode material, comprising:

drying a nano-silicon slurry to prepare dried powder;
preparing a first mixture comprising the dried powder and a first coating material; and
preparing a first intermediate material using the first mixture and a second coating material,
wherein the first coating material comprises a hard coating material or a soft coating material;
the second coating material comprises a hard coating material, a medium coating material, or a soft coating material;
the hard coating layer has a higher hardness than the medium coating layer, and the medium coating layer has a higher hardness than the soft coating layer; and
the first intermediate material comprises a primary particle comprising a first hollow core having a first hollow portion therein and nano-silicon particles packed in the first hollow portion, and a secondary particle comprising a second hollow core having a second hollow portion therein and at least one primary particle packed in the second hollow portion,
the first hollow core having a different hardness than the second hollow core.

**13.** The method according to claim 12, wherein the nano-silicon slurry is prepared by dispersing silicon powder and a dispersant in a first solvent to prepare a dispersion, followed by grinding the dispersion, and the first solvent comprises at least one of water, ethanol, isopropyl alcohol, and potassium hydroxide (KOH).

**14.** The method according to claim 12, further comprising:

forming a first coating layer on an outer circumferential surface of the first intermediate material after preparation of the first intermediate material,
wherein the first coating layer comprises at least one of a hard coating layer, a medium coating layer and a soft coating layer, the first coating layer having a different hardness than the second hollow core; and
wherein the hard coating layer is formed by sintering a mixture of the first intermediate material and the hard coating material;
the medium coating layer is formed by heat treatment of the first intermediate material in a hydrocarbon gas atmosphere; and
the soft coating layer is formed by sintering a mixture of the first intermediate material and the soft coating material.

**15.** A secondary battery comprising:

a cathode;
an anode; and
an electrolyte disposed between the cathode and the anode,
wherein the anode comprises the anode material according to claim 1.

FIG. 1

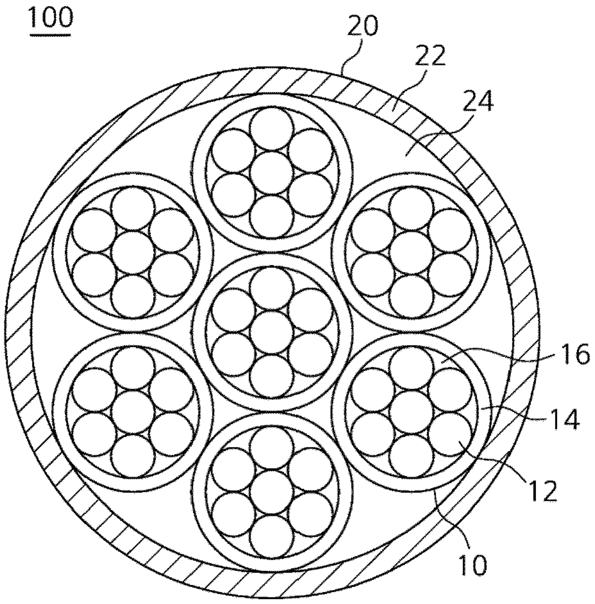


FIG. 2

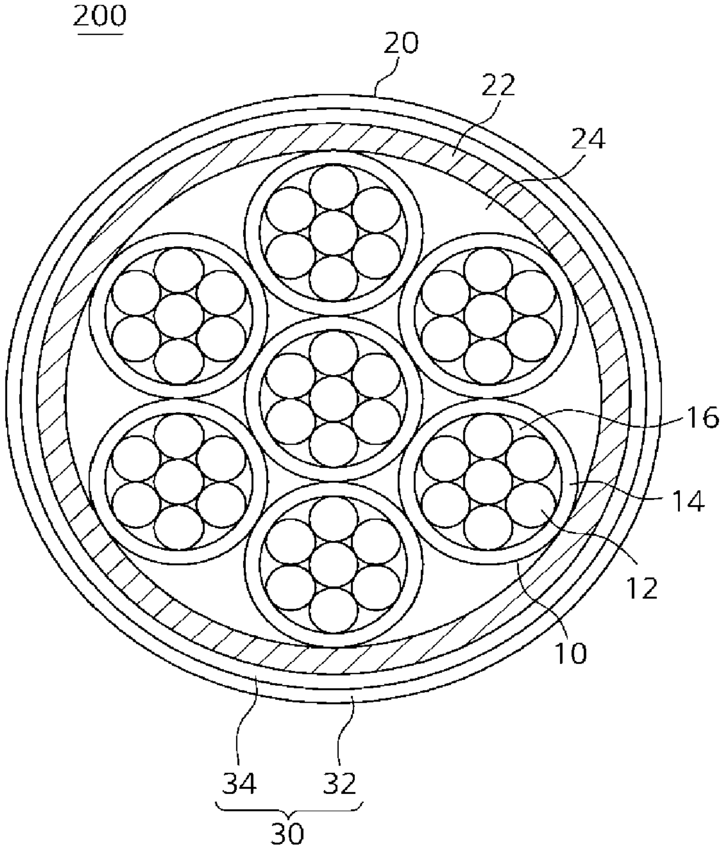

FIG. 3

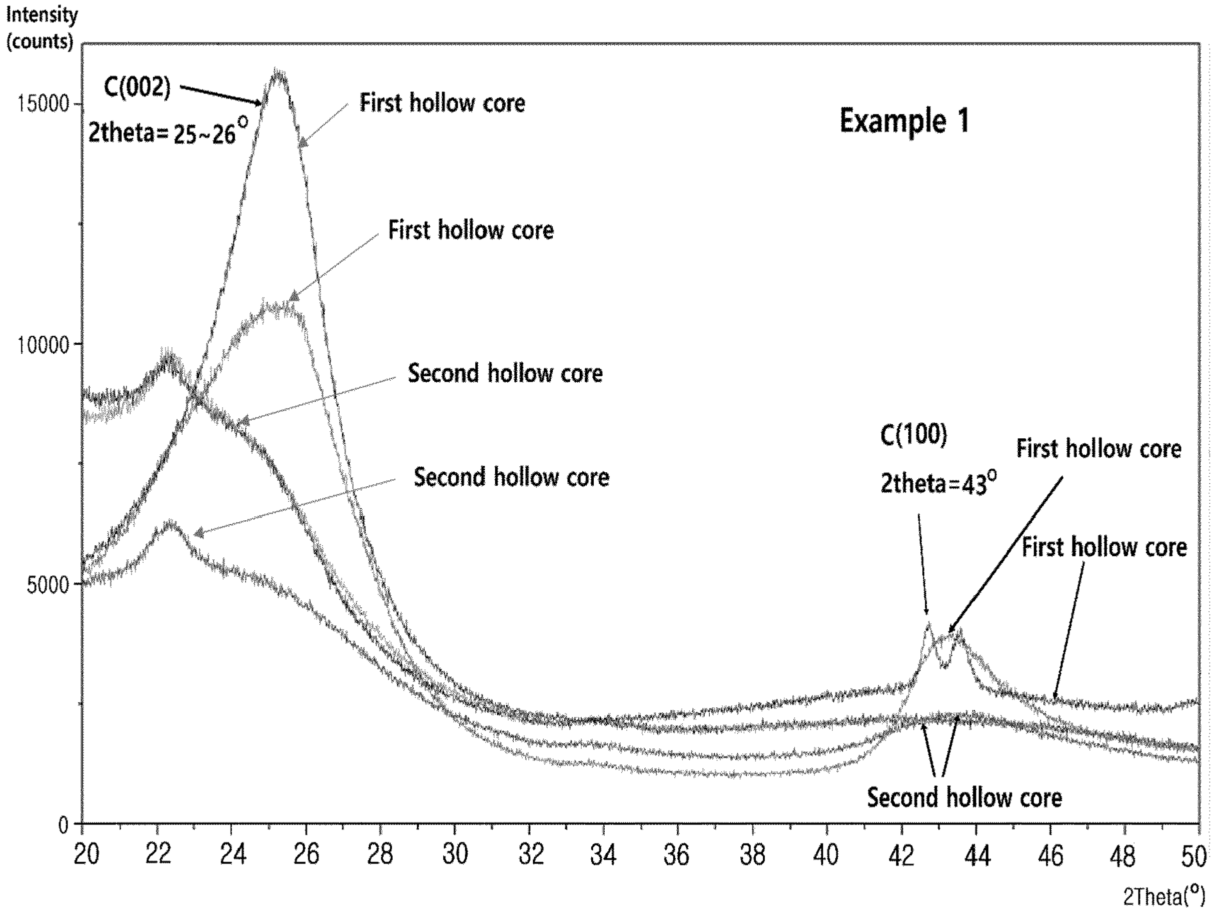
Intensity
(counts)
C(002)
2theta=25~26°
First hollow core
First hollow core
Second hollow core
Second hollow core
Example 1
C(100)
2theta=43°
First hollow core
First hollow core
Second hollow core
15000
10000
5000
0
20
22
24
26
28
30
32
34
36
38
40
42
44
46
48
50
2Theta(°)

Europäisches Patentamt
European Patent Office
Office européen des brevets

# EUROPEAN SEARCH REPORT

Application Number
EP 24 17 5949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 277 243 B1 (GRAPSIL CO LTD [KR]) 14 July 2021 (2021-07-14)<br>* abstract; claims 1-16; figure 2 *<br>* paragraph [0082] - paragraph [0092] *<br>* paragraph [0129] - paragraph [0135] *<br>* paragraph [0112] *<br>* paragraph [0147] *<br>* paragraph [0124] *<br>----- | 1,9,10, 12,13,15 | INV.<br>H01M4/04<br>C01B32/20<br>C01B33/00<br>C09C1/46<br>C01G53/00<br>H01M4/36<br>H01M4/38<br>H01M4/587<br>H01M10/0525<br><br>ADD.<br>H01M4/02 |
| X | EP 4 050 682 A1 (GRAPSIL CO LTD [KR]) 31 August 2022 (2022-08-31)<br>* abstract; claims 1-14; figure 1 *<br>* paragraph [0034] - paragraph [0038] *<br>* paragraph [0101] - paragraph [0102] *<br>* paragraph [0109] *<br>----- | 1,9,10, 15 | |
| X | US 2022/259050 A1 (CHOI JONG OH [KR] ET AL) 18 August 2022 (2022-08-18)<br>* abstract; claims 1-12; figures 1,2 *<br>* paragraph [0006] *<br>* paragraph [0086] - paragraph [0087] *<br>* paragraph [0062] *<br>* paragraph [0036] *<br>----- | 1,9,10, 12,15 | TECHNICAL FIELDS SEARCHED (IPC)<br>H01M<br>C01B<br>C09C |

The present search report has been drawn up for all claims

3

| Place of search | Date of completion of the search | Examiner |
|---|---|---|
| The Hague | 18 October 2024 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 17 5949

This annex lists the patent family members relating to the patent documents cited in the above-mentioned European search report. The members are as contained in the European Patent Office EDP file on
The European Patent Office is in no way liable for these particulars which are merely given for the purpose of information.

18-10-2024

| Patent document cited in search report | | Publication date | Patent family member(s) | | Publication date |
|---|---|---|---|---|---|
| KR 102277243 | B1 | 14-07-2021 | NONE | | |
| EP 4050682 | A1 | 31-08-2022 | CN 114600277 | A | 07-06-2022 |
| | | | EP 4050682 | A1 | 31-08-2022 |
| | | | KR 102244226 | B1 | 26-04-2021 |
| | | | US 2022359868 | A1 | 10-11-2022 |
| | | | WO 2021080066 | A1 | 29-04-2021 |
| US 2022259050 | A1 | 18-08-2022 | CN 113508476 | A | 15-10-2021 |
| | | | JP 7345556 | B2 | 15-09-2023 |
| | | | JP 2022522704 | A | 20-04-2022 |
| | | | KR 102085938 | B1 | 06-03-2020 |
| | | | US 2022259050 | A1 | 18-08-2022 |
| | | | WO 2021091127 | A1 | 14-05-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230062573
- KR 1020230113832
- KR 1020230138050
- KR 1020230160195
- KR 102185490